# EUROPÄISCHE PATENTSCHRIFT

(11) **EP 4 216 495 B1**
(45) Veröffentlichungstag und Bekanntmachung des Hinweises auf die Patenterteilung: **19.03.2025**
(21) Anmeldenummer: 22152369.9
(22) Anmeldetag: 20.01.2022
(51) Int. Cl.: H04L 12/40

(54) **ELEKTROINSTALLATIONSGERÄT ZUR STEUERUNG EINES ELEKTRISCHEN VERBRAUCHERS**
ELECTRICAL DEVICE FOR CONTROLLING AN ELECTRICITY CONSUMER
APPAREIL D'INSTALLATION ÉLECTRIQUE DESTINÉ À COMMANDER UN CONSOMMATEUR ÉLECTRIQUE

(43) Veröffentlichungstag der Anmeldung: 26.07.2023
(73) Patentinhaber: GIRA Giersiepen GmbH & Co. KG, 42477 Radevormwald (DE)
(72) Erfinder: SCHIMMELPFENNIG, Frank, 42477 Radevormwald (DE)
(74) Vertreter: Dr. Solf & Zapf Patent- und Rechtsanwalts PartG mbB

(56) Entgegenhaltungen:
- DE-A1- 102018 201 842
- DE-A1- 3 837 951
- DE-U1- 20 122 102

## Beschreibung

Die Erfindung betrifft ein Elektroinstallationsgerät zur Steuerung eines elektrischen Verbrauchers. Das Elektroinstallationsgerät weist ein Leistungsmodul, mindestens ein Funktionsmodul und mindestens ein Bedienmodul auf.

Das Leistungsmodul weist elektrische Kontakte zur Kontaktierung einer Spannungsquelle, zumindest ein Montagemittel zur Montage an einer Wand, insbesondere in einer Einbauöffnung, und mindestens ein Haltemittel zur lösbaren Befestigung des Funktionsmoduls auf.

Die Einbauöffnung kann im erfindungsgemäßen Sinn sowohl für eine UnterputzMontage in einer Wand ausgebildet sein, als auch für eine Aufputz-Montage in einer Gerätedose ausgebildet sein, die auf der Wand montierbar ist.

Das Funktionsmodul weist eine Funktionssteuerungseinheit zur Bestimmung eines Verarbeitungsprozesses für ein Bediensignal zur Erzeugung des Steuersignals und mindestens ein Haltemittel zur lösbaren Befestigung mit dem Leistungsmodul auf.

Das Bedienmodul weist ein Bedienelement zur Generierung des Bediensignals und ein Haltemittel zur lösbaren Befestigung des Bedienmoduls mit dem Leistungsmodul oder dem Funktionsmodul auf.

Elektroinstallationsgeräte zur Steuerung eines Verbrauchers sind insbesondere in der Hauskommunikationstechnik bekannt und finden regelmäßig Anwendung als Bedienelement für Leuchtmittel, z. B. Raumlampen oder Fensterrollladen. Regelmäßig sind die Bedienelemente als Schalter, Taster oder Dimmer ausgebildet.

Um die Herstellungskosten gering zu halten und die Montage sowie die Einsatzmöglichkeiten der Elektroinstallationsgeräte abhängig von der Steuerungsart und der zu steuernden Verbraucher möglichst weit zu fassen, besteht ein Bedarf darin, die Elektroinstallationsgeräte zumindest teilweise modular auszubilden. Dies wird beispielhaft in der Druckschrift DE 201 22 102 U1 gezeigt.

Weiterhin kann es z. B. im Zuge einer Raumneugestaltung zu einer neuen Designausrichtung kommen, so dass die ursprünglichen Elektroinstallationsgeräte nicht mehr in das gewünschte Erscheinungsbild passen oder z. B. bestimmte Funktionen, z. B. beleuchtete Schalter oder andere Sicherheitsaspekte, auch unter Betrachtung von barrierefreiem Wohnen nicht erfüllen. In diesem Zusammenhang sind insbesondere auch Umbauten für ein seniorengerechtes Wohnen zu nennen. Es ist aus dem Stand der Technik bekannt, Einbaudosen oder spezielle Einbauöffnungen bereitzustellen, welche auf- und/oder unterputz montierbar sind und in welche ein Elektroinstallationsgerät eingesetzt werden kann. Die Einbauöffnungen weisen dabei regelmäßig eine genormte Größe auf, so dass verschiedenartige Elektroinstallationsgeräte in die Einbauöffnung einsetzbar sind. Regelmäßig sind die Einbauöffnungen für Elektroinstallationsgeräte mit einer Höhe von 55 mm und einer Breite von 55 mm ausgebildet, wobei die Tiefe der Elektroinstallationsgeräte in eine Montagerichtung weisend variieren kann.

Auf Grund unterschiedlicher landesspezifischer Stromnetze, z. B. 110 V- oder 220 V-Spannungsnetze sowie unterschiedlicher Kommunikationsnetze der Haustechnik selbst, beispielsweise die Verwendung von EIB/KNX-, Ethernet-, Powerline-, 868 MHz Funk-, Bluetooth-, WLAN- und anderer Kommunikationsstandards, sind bekannte Elektroinstallationsgeräte auf bestimmte Regionen und/oder Kommunikationsnetze beschränkt. Alle diese Netze werden im Sinne der Erfindung unter dem Begriff Hausnetz zusammengefasst.

Um die Funktion oder die Bedienung funktionell oder strukturell anzupassen, werden die aus dem Stand der Technik bekannten Elektroinstallationsgeräte regelmäßig vollständig ausgetauscht. Auch ist es bekannt, z. B. eine Schaltwippe bzw. einen Einbaurahmen bezüglich des äußeren Erscheinungsbildes zu tauschen, um das Elektroinstallationsgerät an ein neues Design anzupassen.

Bei den bekannten Elektroinstallationsgeräten ist die Anpassbarkeit daher nur über einen Austausch des vollständigen Gerätes oder über das Austauschen von Designelementen, die keine für die Funktion wesentliche Änderung bedeuten, begrenzt, so dass die Variabilität stark eingeschränkt ist. Infolgedessen muss sich der Hersteller und der Endanwender auf eine bestimmte Art der Bedienung und der Kommunikation bzw. der Vernetzung festlegen. Bei einem als Dimmer ausgebildeten Elektroinstallationsgerät hat der Anwender zum Beispiel die Wahl zwischen einer mechanischen Taste, einem Drehknopf oder einem so genannten "Touch-Dimmer" mit berührungssensitiver Fläche. Ein nachträgliches Ändern, bspw. von einer mechanischen Taste auf einen Drehknopf, ist meist nur durch einen Austausch des gesamten Elektroinstallationsgeräts möglich. Eine ähnliche Problematik tritt bei bekannten Elektroinstallationsgeräten auf, wenn es zu einem Austausch des Hausnetzes kommt, z. B. umzugsbedingt, und die Elektroinstallationsgeräte weiterverwendet werden sollen.

Der Erfindung liegt die Aufgabe zugrunde, ein Elektroinstallationsgerät zur Verfügung zu stellen, welches sich in der Funktion, Vernetzung und/oder der Bedienung und/oder dem Design leichter anpassen bzw. ändern lässt.

Die Aufgabe wird erfindungsgemäß durch ein Elektroinstallationsgerät mit den Merkmalen des Anspruchs 1 gelöst.

Das Elektroinstallationsgerät weist mindestens drei Module, ein Leistungsmodul, ein Funktionsmodul und ein Bedienmodul, auf, die jeweils als für sich abgeschlossene Gehäuseeinheiten ausgebildet sind und gemeinsam das Elektroinstallationsgerät bilden.

"Abgeschlossene Gehäuseeinheit" meint im Sinne der Erfindung, dass die Module jeweils ein eigenes Gehäuse aufweisen, wobei zumindest das Funktionsmodul und das Bedienmodul als Aufsatzteile ausgebildet sind, so dass die Module mit allen zugehörigen Komponenten als Einheit voneinander getrennt und montiert werden können, wobei die Module mittels der Haltemittel ohne Zerstörung lösbar, insbesondere mechanisch und/oder magnetisch miteinander verbunden sind. Zweckmäßig bildet das Leistungsmodul eine Basis, auf welche das Funktionsmodul und das Bedienmodul als Aufsätze montierbar sind.

Insbesondere sind die einzelnen Module jeweils durch gattungsgemäße Module ihrer Art austauschbar, so dass ein erstes Bedienmodul, z. B. zur Bedienung eines Dimmers mit mechanischen Tastelementen, durch ein gattungsgemäßes zweites Bedienmodul, z. B. zur Bedienung eines Dimmers mit einem mechanischen Drehknopf, unabhängig vom Leistungsmodul oder dem Funktionsmodul ausgetauscht werden kann.

"Gattungsgemäßes Modul" beschreibt im Sinne der Erfindung die drei Modularten, Leistungsmodul, Funktionsmodul und Bedienmodul.

Die Gattung der Bedienmodule umfasst die verschiedenen Bedientechniken, die sowohl unmittelbar am Bedienmodul angeordnet sein können, oder auch eine Kommunikationsschnittstelle, mittels der eine Bedienung über ein anderes entferntes Gerät ermöglicht wird. Zur Veranschaulichung fallen unter die Gattung der Bedienmodule beispielsweise ein mechanischer Taster oder Schalter, ein mechanischer Drehknopf, berührungssensitive, insbesondere elektrostatische Oberflächen und kapazitive Bedienfelder, bei denen ein elektrisches Feld durch Annäherung oder Berührungen geändert wird, so dass eine Geste oder Berührung erkannt werden kann. Weitere Bedienmodule sind exemplarisch andere optische, thermische oder akustische Sensoren sowie auch Funkempfänger oder IR-Empfänger.

Entsprechend dem Bedienmodul sind auch das Leistungsmodul und das Funktionsmodul jeweils mit gattungsgemäßen Gegenstücken, gattungsgemäßen Funktionsmodulen bzw. gattungsgemäßen Leistungsmodulen austauschbar.

So können sich gattungsgemäße Leistungsmodule in der Höhe der Versorgungsspannung, insbesondere 110V oder 220V, und/oder in der Art der Anschlusstechnik, insbesondere 2-Leiter oder 3-Leiter Anschluss, oder des Kommunikationsanschlusses, z.B. KNX/EIB-Busanschluss, unterscheiden.

Gattungsgemäße Funktionsmodule unterscheiden sich vorzugsweise in der Art, wie ein Bediensignal verarbeitet werden soll, insbesondere kann ein Bedienmodul auch lediglich auf einen bestimmten Verarbeitungsprozess verweisen, welcher insbesondere im Leistungsmodul gespeichert ist, wobei auch der eigentliche Verarbeitungsprozess in dem Leistungsmodul durchgeführt wird. In diesem Fall dient das Funktionsmodul als Funktionsindikator für das Leistungsmodul. Weiterhin können sich gattungsgemäße Funktionsmodule in ihrer Schalt- und/oder Regelungslogik unterscheiden, insbesondere ist in einem derartigen Fall die Funktionssteuerungseinheit derart ausgebildet, dass sie das Bediensignal verarbeiten und das Steuersignal erzeugen kann. Eine solche Schalt- und/oder Regelungslogik ist z.B. eine einfache Ein/Aus-Schaltung, eine Wechsel-Schaltung, eine Kreuz-Schaltung, eine Dimmfunktion, eine Rollladen-Steuerung, eine VentilSteuerung und dergleichen.

Daraus resultiert, dass sich der Nutzer sein Elektroinstallationsgerät individuell anpassen kann, wobei er hinsichtlich des Leistungsmoduls, des Funktionsmoduls und des Bedienmoduls aus einem Baukasten auswählen kann, um dadurch das für ihn optimale und bedarfsgerechte Elektroinstallationsgerät zusammenstellen.

Insbesondere werden die Steuersignale in dem Funktionsmodul von der Funktionssteuerungseinheit erzeugt und an das Leistungsmodul und von dem Leistungsmodul in ein Hausnetz leitbar. Alternativ weist das Leistungsmodul eine mit der Funktionssteuerungseinheit des Funktionsmoduls verbundene Steuereinheit auf, wobei die Steuereinheit abhängig von der Funktionssteuerungseinheit das Bediensignal verarbeiten und das Steuersignal erzeugen kann. Diese Ausführungen ermöglichen es, Schaltelemente oder andere Verarbeitungsgeräte, welche auf die Steuersignale reagieren, außerhalb des Elektroinstallationsgeräts anzuordnen. Beispielsweise können die Steuersignale für ein BUS-System aufbereitet in das Hausnetz geleitet werden. Gemäß einer besonders vorteilhaften Ausführung weist das Leistungsmodul daher elektrische Kontakte zur Kontaktierung einer BUS-Leitung und einen Bus-Controller zur Kommunikation über die BUS-Leitung und zur Übertragung eines BUS-Steuersignals zur Steuerung des elektrischen Verbrauchers über die BUS-Leitung auf.

Vorteilhaft, insbesondere wenn kein BUS-Netzwerk besteht oder ein zu schaltender elektrischer Verbraucher nicht an dem BUS-Netzwerk angeschlossen ist, kann das Leistungsmodul elektrische Kontakte zur Kontaktierung des elektrischen Verbrauchers und/oder elektrische Schaltmittel zum direkten Schalten des elektrischen Verbrauchers aufweisen.

Insbesondere um das Leistungsmodul, das Funktionsmodul und das Bedienmodul zu einer Einheit zusammenzusetzen, kann das Funktionsmodul jeweils ein Haltemittel zum Verbinden mit dem Leistungsmodul und zum Verbinden mit dem Bedienmodul aufweisen. Diese Ausführung ist besonders vorteilhaft bei einer weiteren Variante des Elektroinstallationsgeräts, gemäß welcher das Funktionsmodul in Montagerichtung zwischen dem Leistungsmodul und dem Bedienmodul angeordnet ist und eine Funktionsmodulschnittstelle des Leistungsmoduls mit einer Leistungsmodulschnittstelle des Funktionsmoduls und eine Bedienmodulschnitte des Funktionsmoduls mit einer Funktionsmodulschnittstelle des Bedienmoduls verbindbar bzw. verbunden sind. Insbesondere lässt sich durch eine Anordnung der Module in Montagerichtung die Oberfläche des Bedienmoduls vergrößern, was vorteilhaft für den Bedienkomfort bzw. für eine Positionierung des zumindest einen Bedienelements sein kann. Weiterhin wird das Funktionsmodul besser vor äußeren Einflüssen geschützt und das Erscheinungsbild des Elektroinstallationsgeräts wird verbessert.

Alternativ dazu kann es vorteilhaft sein, wenn das Funktionsmodul und das Bedienmodul in einer gemeinsamen Ebene nebeneinander in Montagerichtung auf dem Leistungsmodul anordenbar bzw. in einem montierten Zustand angeordnet sind. Insbesondere sind die jeweiligen Module in dieser Ausführung leicht zu erreichen, und eine Montage und/oder Demontage kann insbesondere leichter durchgeführt werden.

Zweckmäßig kann das Leistungsmodul eine Versorgungsspannung an das Funktionsmodul und/oder das Bedienmodul übertragen. Insbesondere weist das Leistungsmodul eine Spannungsversorgungselektronik auf, welche eine Netzspannung oder Busspannung des Hausnetzes in eine Gleichspannung als Versorgungsspannung von den elektronischen Komponenten des Leistungsmoduls, des Funktionsmoduls und/oder des Bedienmoduls umwandeln kann.

Zweckmäßig ist das Funktionsmodul derart ausgebildet, dass es eine im Leistungsmodul integrierte bzw. gespeicherte Funktionalität freischaltet. Bei der Funktionalität handelt es sich insbesondere um den Verarbeitungsprozess für das Bediensignal. Zu diesem Zweck ist in der Funktionssteuerungseinheit eine Gerätekennung/ID-Tag enthalten bzw. ist die Gerätekennung/ID-Tag über die Funktionssteuerungseinheit aus einem Speicher auslesbar.

Die Gerätekennung /ID-Tag ist insbesondere ein Transponder-Teil eines RFID-Systems, der als ein Identifikator fungiert. Der Transponder kann zweckmäßig aus einem benachbarten Modul mit Spannung versorgt und danach ausgelesen werden. Vorzugsweise erfolgt die Spannungsversorgung induktiv und kontaktlos. Optional kann die Gerätekennung /ID-Tag eine elektronische Verschlüsselung und/oder eine elektronische Signatur zur Sicherheit aufweisen. Alternativ oder ergänzend ist die Gerätekennung /ID-Tag derart ausgebildet, dass eine Authentizitätsprüfung ermöglicht wird. Zweckmäßig dient die Authentizitätsprüfung zum Nachweis der Echtheit und Fälschungssicherheit des Funktionsmoduls. Vorteilhaft wird die im Leistungsmodul integrierte bzw. gespeicherte Funktionalität abhängig von dem erkannten Transponder angepasst bzw. bereitgestellt.

Vorteilhaft stellt das Funktionsmodul mittels der Funktionssteuerungseinheit die Gerätekennung/ID-Tag bereit, welcher mittels einer im Leistungsmodul ausgebildeten Leseeinheit erfasst wird. Zweckmäßig kann die Gerätekennung/ID-Tag über die Leistungsmodulschnittstelle des Funktionsmoduls und die Funktionsmodulschnittstelle des Leistungsmoduls übertragen werden. Insbesondere kann das Leistungsmodul auf Basis der von der Funktionssteuerungseinheit bereitgestellten Gerätekennung/ID-Tags die jeweilige integrierte bzw. gespeicherte Funktionalität bereitstellen bzw. den Verarbeitungsprozess für das Bediensignal ausführen. Auf der Basis der Gerätekennung/ID-Tags wird dadurch in dem Leistungsmodul sowohl das Steuersignal erzeugt als auch zweckmäßig der elektrische Verbraucher abhängig vom Steuersignal kontaktiert. Das Funktionsmodul wird dadurch von funktionellen Anteilen entkoppelt und bestimmt mit der Gerätekennung/ID-Tag die Einstellung für den auszuführenden Verarbeitungsprozess für das Bediensignal. Beispielhaft kann die Gerätekennung/ID-Tag von dem Funktionsmodul als eine "Jalousiebedienung" identifiziert werden, woraufhin das Funktionsmodul die Funktionalität "Lamellenverstellung" bereitstellt, welche es bei einer Gerätekennung/ID-Tag einer "Lichtsteuerung" nicht anbieten würde.

Gemäß einer Ausführung weist das Funktionsmodul Schaltelemente auf, die zumindest mit den elektrischen Kontakten des Leistungsmoduls verbunden sind. Zweckmäßig sind die Schaltelemente durch das Steuersignal der Funktionssteuerungseinheit des Funktionsmoduls steuerbar. Vorteilhaft kann gemäß dieser Ausführung mittels eines Austauschs des Funktionsmoduls durch ein gattungsgemäßes anderes Funktionsmodul das Elektroinstallationsgerät bzw. die zu erreichende Wirkung des Elektroinstallationsgerätes umfangreich geändert werden, da das Leistungsmodul lediglich die Verbindung zum Hausnetz herstellt, wobei eine Verschaltung und/oder Schaltsignale von dem Funktionsmodul selbst in Reaktion auf das Bediensignal bzw. das Steuersignal bereitgestellt werden.

Gemäß einer Variante weist das Leistungsmodul Schaltelemente auf. Insbesondere sind die Schaltelemente des Leistungsmoduls mit den elektrischen Kontakten des Leistungsmoduls verbunden. Vorteilhaft sind die Schaltelemente mittels des Steuersignals der Funktionssteuerungseinheit steuerbar, wobei das Steuersignal an die Schaltelemente im Leistungsmodul leitbar ist.

Insbesondere ermöglicht die Versorgungsspannung, das Funktionsmodul, insbesondere die Funktionssteuereinheit des Funktionsmoduls, und/oder das Bedienelement des Bedienmoduls mit einer elektrischen Spannung zu versorgen.

Insbesondere berührungssensitive Bildschirme, Funknetzschnittstellen oder beleuchtete Taster können dadurch einfach mit der notwendigen Spannung versorgt werden.

Insbesondere sind eine Funktionsmodulschnittstelle des Leistungsmoduls mit einer Leistungsmodulschnittstelle des Funktionsmoduls und vorzugsweise eine Bedienmodulschnittstelle des Leistungsmoduls mit einer Leistungsmodulschnittstelle des Bedienmoduls elektrisch verbindbar bzw. verbunden. Zweckmäßig ist es bei dieser Ausführung möglich, das Bediensignal von dem Bedienmodul über die Leistungsmodulschnittstelle des Bedienmoduls und die Bedienmodulschnittstelle des Leistungsmoduls an das Leistungsmodul und über die Funktionsmodulschnittstelle des Leistungsmoduls und die Leistungsmodulschnittstelle des Funktionsmoduls an das Funktionsmodul zu leiten. Insbesondere sieht es diese Ausführung weiterhin vor, dass das Steuersignal über die Leistungsmodulschnittstelle des Funktionsmoduls und die Funktionsmodulschnittstelle des Leistungsmoduls an das Leistungsmodul leitbar ist, so dass das Leistungsmodul auf das Steuersignal hin den Verbraucher mittel- und/oder unmittelbar kontaktieren und/oder verschalten kann.

Vorteilhaft kann die Versorgungsspannung von dem Leistungsmodul, über die Bedienmodulschnittstelle des Leistungsmoduls an das Bedienmodul, über die Leistungsmodulschnittstelle des Bedienmoduls und/oder an das Funktionsmodul über die Funktionsmodulschnittstell des Leistungsmoduls und die Leistungsmodulschnittstelle des Funktionsmoduls angelegt werden.

Gemäß einer vorteilhaften Ausführung sind eine Funktionsmodulschnittstelle des Leistungsmoduls mit einer Leistungsmodulschnittstelle des Funktionsmoduls und eine Bedienmodulschnittstelle des Funktionsmoduls mit einer Funktionsmodulschnittstelle des Bedienmoduls elektrisch verbindbar bzw. verbunden. Vorteilhaft kann das Bediensignal von dem Bedienmodul über die Funktionsmodulschnittstelle des Bedienmoduls und die Bedienmodulschnittstelle des Funktionsmoduls geleitet werden. Bevorzugt kann das Steuersignal von dem Funktionsmodul über die Leistungsmodulschnittstelle des Funktionsmoduls und die Funktionsmodulschnittstelle des Leistungsmoduls an das Leistungsmodul geleitet werden.

Insbesondere ist die Versorgungsspannung von dem Leistungsmodul über die Funktionsmodulschnittstelle des Leistungsmoduls und die Leistungsmodulschnittstelle des Funktionsmoduls an das Funktionsmodul übertragbar. Bevorzugt ist weiterhin die Versorgungsspannung von dem Funktionsmodul über die Bedienmodulschnittstelle des Funktionsmoduls an das Bedienmodul über die Funktionsmodulschnittstelle des Bedienmoduls übertragbar.

Eine andere Ausführungsvariante sieht vor, dass eine Funktionsmodulschnittstelle des Leistungsmoduls mit einer Leistungsmodulschnittstelle des Funktionsmoduls und eine Bedienmodulschnittstelle des Leistungsmoduls mit einer Leistungsmodulschnittstelle des Bedienmoduls und eine Funktionsmodulschnittstelle des Bedienmoduls mit einer Bedienmodulschnittstelle des Funktionsmoduls elektrisch verbindbar bzw. verbunden sind.

Vorteilhaft ist das Bediensignal von dem Bedienmodul über die Funktionsmodulschnittstelle des Bedienmoduls und die Bedienmodulschnittstelle des Funktionsmoduls an das Funktionsmodul und/oder über die Leistungsmodulschnittstelle des Bedienmoduls und die Bedienmodulschnittstelle des Leistungsmoduls an das Leistungsmodul und von dem Leistungsmodul über die Funktionsmodulschnittstelle des Leistungsmoduls und die Leistungsmodulschnittstelle des Funktionsmoduls an das Funktionsmodul leitbar.

Zweckmäßig ist die Versorgungsspannung ausgehend von dem Leistungsmodul über die Bedienmodulschnittstelle des Leistungsmoduls und die Leistungsmodulschnittstelle des Bedienmoduls an das Bedienmodul anlegbar und über die Funktionsmodulschnittstelle des Leistungsmoduls und die Leistungsmodulschnittstelle des Funktionsmoduls an das Funktionsmodul anlegbar.

Alternativ oder ergänzend kann die Versorgungsspannung auch von dem Leistungsmodul über die Bedienmodulschnittstelle des Leistungsmoduls oder die Funktionsmodulschnittstelle des Leistungsmoduls und die Leistungsmodulschnittstelle des Bedienmoduls oder die Leistungsmodulschnittstelle des Funktionsmoduls an das Bedienmodul oder das Funktionsmodul übertragen werden und von dem Bedienmodul oder dem Funktionsmodul aus über die Funktionsmodulschnittstelle des Bedienmoduls und die Bedienmodulschnittstelle des Funktionsmoduls an das Funktionsmodul oder das Bedienmodul übertragen werden.

Insbesondere sind das Leistungsmodul und/oder das Funktionsmodul und/oder das Bedienmodul zum Anlegen mit der Versorgungsspannung zueinander in Reihe oder parallelgeschaltet.

Zweckmäßig ist zumindest die Funktionsmodulschnittstelle und/oder die Leistungsmodulschnittstelle und/oder die Bedienmodulschnittstelle als elektrische Steckkontakte, als kontaktlose induktive Schnittstelle oder Funk-basierte Schnittstelle ausgebildet, wobei zweckmäßig die jeweils zu verbindende Leistungsmodulschnittstelle oder die Bedienmodulschnittstelle oder die Funktionsmodulschnittstelle korrespondierend ausgebildet ist.

Als Ergänzung oder Alternative hat sich zudem herausgestellt, dass vorteilhaft zumindest die Leistungsmodulschnittstelle und/oder die Bedienmodulschnittstelle und/oder die Funktionsmodulschnittstelle als erste Induktionsschnittstellen ausgebildet sind, wobei insbesondere die mit der ersten Induktionsschnittstelle zu verbindende Leistungsmodulschnittstelle oder die Bedienmodulschnittstelle oder die Funktionsmodulschnittstelle korrespondierend als zweite Induktionsschnittstelle ausgebildet ist.

Gemäß einer Variante des Elektroinstallationsgeräts weist das Leistungsmodul und/oder das Bedienmodul und/oder das Funktionsmodul einen RFID-Chip auf. Insbesondere ist zumindest eine Gerätekennung des jeweiligen Leistungsmoduls oder Bedienmoduls aus dem RFID-Chip auslesbar. Zweckmäßig kann der RFID-Chip eine Gerätekennung/ID-Tag des Funktionsmoduls insbesondere dem Leistungsmodul zur Bestimmung des Verarbeitungsprozesses für das Bediensignal zur Verfügung stellen, wobei der RFID-Chip als Teil der Funktionssteuerungseinheit ausgebildet ist oder unmittelbar mit der Funktionssteuerungseinheit verbunden ist. Zudem hat sich als vorteilhaft erwiesen, wenn zumindest eine RFID-Leseeinheit in dem Leistungsmodul und/oder dem Funktionsmodul und/oder dem Bedienmodul ausgebildet ist. Die Gerätekennung wird vorteilhafterweise zur automatischen Konfiguration des Leistungsmoduls, des Funktionsmoduls und/oder des Bedienmoduls verwendet.

Insbesondere der RFID-Chip ist besonders vorteilhaft dazu geeignet, Montagefehler zu vermeiden. Dadurch wird insbesondere die Lebenserwartung des Elektroinstallationsgeräts gesteigert und die Funktion sichergestellt.

Zweckmäßig weist das Elektroinstallationsgerät zumindest einen Mikrocontroller auf, welcher insbesondere als Teil der Funktionssteuerungseinheit ausgebildet ist oder mit der Funktionssteuerungseinheit verbunden ist. Von Vorteil ist der Mikrocontroller in dem Leistungsmodul und/oder dem Funktionsmodul ausgebildet.

Vorzugsweise ist/sind die RFID-Leseeinheit(en) in dem Leistungsmodul und/oder dem Funktionsmodul und/oder dem Bedienmodul mit dem Mikrocontroller derart verbunden, dass zumindest die Gerätekennung von dem Mikrocontroller erkannt und verarbeitet werden kann.

Vorteilhaft kann/können das Funktionsmodul und/oder das Leistungsmodul und/oder das Bedienmodul, vorzugsweise das Funktionsmodul und/oder das Leistungsmodul, mittels des Mikrocontrollers die jeweiligen anderen Module erkennen und sich entsprechend derart konfigurieren, dass die jeweilige Funktion erfüllt wird. Zweckmäßig weist das Leistungsmodul die mit der Funktionssteuerungseinheit des Funktionsmoduls verbundene Steuereinheit auf. Die Steuereinheit kann dabei insbesondere über die Modulschnittstellen und/oder eine RFID-Verbindung mit der Funktionssteuerungseinheit verbunden sein. Vorteilhaft weist die Steuereinheit zur Verarbeitung der Gerätekennung/ID-Tag den Mikrocontroller auf. Die Steuereinheit kann in Abhängigkeit von der Gerätekennung/ID-Tag der Funktionssteuerungseinheit des Funktionsmoduls das Bediensignal verarbeiten und das Steuersignal erzeugen.

Insbesondere kann die Funktionssteuerungseinheit das Bediensignal entsprechend dem Bedienmodul angepasst auswerten und entsprechend dem Leistungsmodul ein angepasstes Steuerungssignal weiterleiten. Weiterhin kann das Leistungsmodul eine Versorgungsspannung entsprechend dem mit der Gerätekennung identifizierten Bedienmodul und/oder dem mit der Gerätekennung identifizierten Funktionsmodul den jeweiligen Modulen zur Verfügung stellen.

Zweckmäßig ist ein Speicher mit dem Mikrocontroller, welchen das Funktionsmodul und/oder das Leistungsmodul aufweist, verbunden. Der Mikrocontroller ist dabei mit der Funktionssteuerungseinheit verbunden. Alternativ bildet der Mikrocontroller selbst ganz oder teilweise die Funktionssteuerungseinheit. Vorzugsweise ist auf dem Speicher zumindest ein Steuerprozess zur Verarbeitung zumindest eines Bediensignals und Erzeugung zumindest eines speziellen Steuersignals und/oder zur Bereitstellung zumindest einer speziellen Versorgungsspannung gespeichert.

Vorzugsweise hat der Speicher auf verschiedene Leistungsmodule und/oder Bedienmodule und/oder Funktionsmodule angepasste Steuerprozesse, insbesondere Verarbeitungsprozesse, zur Verarbeitung von unterschiedlichen Bediensignalen und/oder Erzeugung unterschiedlicher Steuersignale und/oder zur Bereitstellung von unterschiedlichen speziellen Versorgungsspannungen gespeichert. Insbesondere können dadurch die Module in unterschiedlichen Kombinationen verwendet werden, so dass die jeweiligen Module zueinander aufwandsarm gegen gattungsgemäße Module austauschbar sind.

Vorteilhaft weist/weisen das Funktionsmodul und/oder das Leistungsmodul und/oder das Bedienmodul eine mit dem Mikrocontroller verbundene Wartungsschnittstelle zum Verbinden mit einer externen Lese- und Schreibeinheit auf. Vorteilhaft kann die Lese- und Schreibeinheit die auf dem Speicher gespeicherten Steuerprozesse bearbeiten und/oder ergänzen. Die Ausführung ermöglicht es, dass die Anwendungsmöglichkeiten der jeweiligen Module dadurch erweitert bzw. angepasst werden können.

**In** einer vorteilhaften Variante der Erfindung weist das Bedienmodul mehr als ein Bedienelement auf, welche bei Betätigung jeweils ein eigenes Bediensignal erzeugen. Vorteilhaft sind die Bediensignale an das Funktionsmodul und/oder das Leistungsmodul sendbar, wobei insbesondere die Funktionssteuerungseinheit oder eine Steuereinheit im Leistungsmodul, vorzugsweise in einer besonderen Ausführung mittels des Mikrocontrollers, zwischen den Bediensignalen der jeweiligen Bedienelemente unterscheiden kann. Vorzugsweise sind den unterschiedlichen Bediensignalen unterschiedliche Steuerungsprozesse zugewiesen, so dass unterschiedliche Steuersignale ausgegeben werden können.

**In** einer Variante des Elektroinstallationsgeräts ist mindestens ein Bedienelement des Bedienmoduls aktiv von einem Anwender betätigbar. Dabei ist das Bedienmodul derart ausgebildet, dass es in Reaktion auf die Betätigung zumindest ein Bediensignal an das Funktionsmodul und/oder das Leistungsmodul sendet bzw. senden kann.

**In** einem vorteilhaften Aspekt des Elektroinstallationsgeräts ist das Bedienelement druckempfindlich, z. B. als eine Drucktaste, eine Wippe oder eine berührungsempfindliche Displayoberfläche ausgebildet. Außerdem ist das Bedienelement auch als ein Empfänger, z. B. ein Infrarotempfänger, ein RFID-Empfänger oder ein Funkempfänger ausbildbar, so dass ein Anwender aktiv einen Befehl an das Bedienelement senden kann, um damit die gewünschte Wirkung des Elektroinstallationsgeräts zu erzeugen. Das Bedienelement kann indes auch auf mehrere von einem Empfänger empfangbare Befehle abgestimmt sein, so dass beispielsweise eine mehrtastige Fernbedienung unterschiedliche Befehle an den Empfänger senden kann, z. B. Licht an/aus und Rollladen hoch/runter, wobei das Bedienmodul für jeden Befehl ein jeweils anderes Bediensignal ausgibt, welches die Funktionssteuereinheit im Funktionsmodul oder die Steuereinheit im Leistungsmodul, insbesondere gemäß einer vorteilhaften Ausführung mittels des Mikrocontrollers, dem entsprechenden Steuerprozess zuordnet.

Gemäß einer anderen Ausführung ist zumindest ein Bedienelement ein Umgebungssensor. Vorzugsweise ist der Umgebungssensor als ein Thermometer oder ein Lichtsensor oder ein Bewegungssensor ausgebildet. **In** einer speziellen Ausführung ist der Umgebungssensor mit einer, auf einen bestimmten Normalzustand des Umfeldes abgestimmten, Regelungselektronik verbunden, so dass bei einer Abweichung von diesem Normalzustand das Bediensignal erzeugt wird. Eine andere Variante sieht vor, dass die Messdaten des Umgebungssensors selbst als Bediensignale an die Funktionssteuerungseinheit oder die Steuereinheit im Leistungsmodul gesendet werden, insbesondere ist die Funktionssteuerungseinheit oder die Steuereinheit auf einen bestimmten Normalzustand des Umfeldes abgestimmt und erzeugt, insbesondere mittels des Mikrocontrollers, bei einer Abweichung zwischen den Messdaten von dem Normalzustand des Umfeldes, das Steuerungssignal.

Weitere vorteilhafte Ausgestaltungen der Erfindung ergeben sich aus der folgenden Figurenbeschreibung und den abhängigen Unteransprüchen.

Es zeigen:
- Fig. 1: eine schematische Ansicht einer Anordnung von Modulen einer Ausführungsform eines Elektroinstallationsgeräts,
- Fig. 2: eine schematische Ansicht einer Anordnung von Modulen einer weiteren Ausführungsform eines Elektroinstallationsgeräts,
- Fig. 3: eine schematische Ansicht von Verbindungen der Module einer weiteren Ausführungsform eines Elektroinstallationsgeräts,
- Fig. 4: eine schematische Ansicht von Verbindungen der Module einer weiteren Ausführungsform eines Elektroinstallationsgeräts,
- Fig. 5: eine schematische Ansicht von Verbindungen der Module einer weiteren Ausführungsform eines Elektroinstallationsgeräts und
- Fig. 6: eine schematische Ansicht von Verbindungen der Module einer weiteren Ausführungsform eines Elektroinstallationsgeräts.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

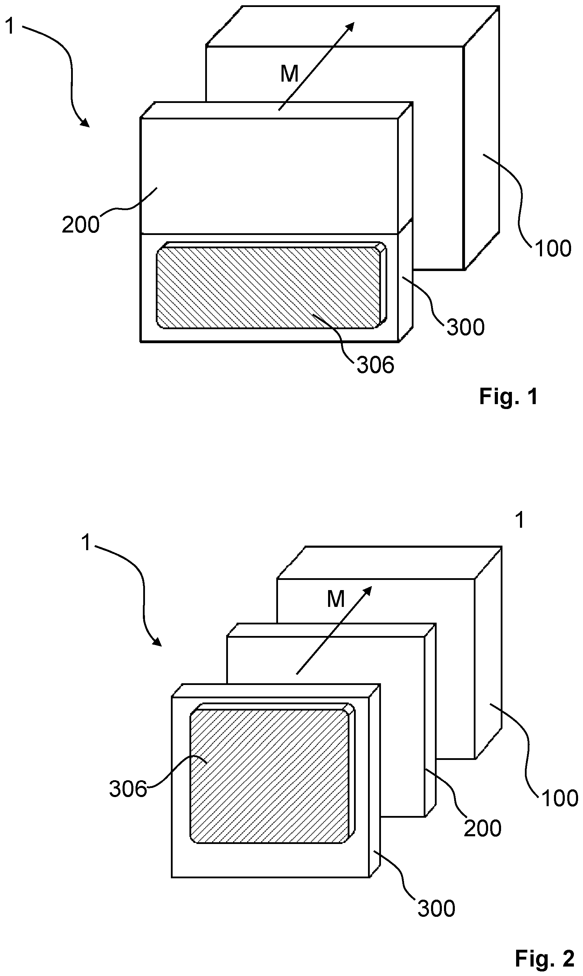

Fig. 1 und 2 zeigen ein Elektroinstallationsgerät 1 zur Steuerung eines elektrischen Verbrauchers. Dieses weist ein Leistungsmodul 100, mindestens ein Funktionsmodul 200 und mindestens ein Bedienmodul 300 auf.

Elektroinstallationsgeräte 1 zur Steuerung eines Verbrauchers sind insbesondere als Schalter für Leuchtmittel, z. B. für Raumlampen, oder z. B. als Rollladensteuerung, als Taster oder Dimmer ausgebildet.

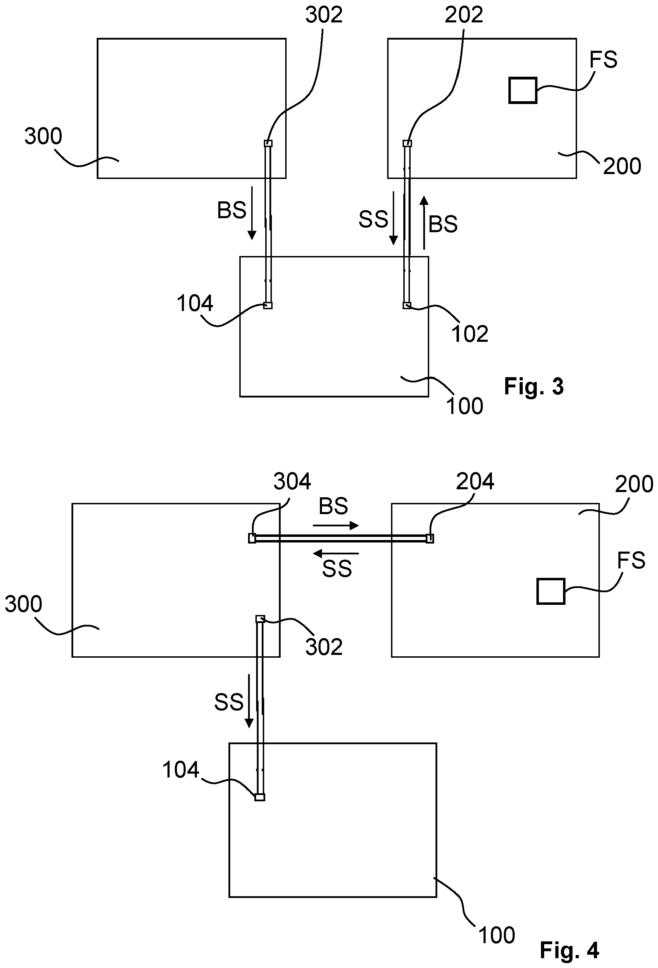

Das Leistungsmodul 100 weist, wie in Fig. 3 bis 6 dargestellt, elektrische Kontakte zur Kontaktierung einer Spannungsquelle, zumindest ein Montagemittel zur Montage an einer Wand, insbesondere in einer Einbauöffnung, und mindestens ein Haltemittel zur lösbaren Befestigung des Funktionsmoduls 200 auf.

Besonders vorteilhaft sind die elektrischen Kontakte des Leistungsmoduls 100 als Goldkontakte und/oder Federkontakte, z. B. Pogo Linie der Marke ECT, ausgebildet.

Diese Kontakte sind effektiv, und die Federkontakte können besonders vorteilhaft auf abweichende Einbauhöhen reagieren bzw. einen Versatz ausgleichen oder sich einem dynamischen Verhalten anpassen.

Das Funktionsmodul 200 weist, wie in Fig. 3 bis 6 dargestellt, eine Funktionssteuerungseinheit FS zur Bestimmung eines Verarbeitungsprozesses für ein Bediensignal und mindestens ein Haltemittel zur lösbaren Befestigung mit dem Leistungsmodul 100 auf.

Das Bedienmodul 300 weist zumindest, wie in Fig. 1 und 2 dargestellt, ein Bedienelement 306 zur Generierung des Bediensignals BS und ein, nicht dargestelltes, Haltemittel zur lösbaren Befestigung des Bedienmoduls 300 mit dem Leistungsmodul 100 oder dem Funktionsmodul 200 auf.

Weiterhin sind das Funktionsmodul 200, das Bedienmodul 300 und das Leistungsmodul 100 zueinander jeweils als eine für sich abgeschlossene Gehäuseeinheit ausgebildet.

"Abgeschlossene Gehäuseeinheit" meint im Sinne der Erfindung, dass die Module 100, 200, 300 jeweils ein eigenes Gehäuse aufweisen, wie schematisch in den Fig.1 und 2 dargestellt ist, wobei zumindest das Leistungsmodul 100 und das Bedienmodul 300 Aufsatzteile sind, so dass die Module 100, 200, 300 mit allen zugehörigen Komponenten als Einheit voneinander getrennt und montiert werden können, wobei die Module 100, 200, 300 mittels der Haltemittel lösbar miteinander verbunden sind.

Vorzugsweise wird das Elektroinstallationsgerät 1 in einer Einbauöffnung montiert. Diese Einbauöffnungen können auch in Einbaudosen ausgebildet sein. Weiterhin können die Einbauöffnungen für eine Aufputz- oder Unterputzmontage ausgebildet sein.

Die Einbauöffnungen weisen vorzugsweise eine genormte Größe auf, so dass verschiedenartige Elektroinstallationsgeräte 1 in die Einbauöffnung einsetzbar sind.

Insbesondere sind die Einbauöffnungen für das Elektroinstallationsgerät 1 mit einer Höhe von 55 mm und einer Breite von 55 mm ausgebildet, wobei die Tiefe des Elektroinstallationsgeräts 1 bzw. der Einbauöffnung in eine Montagerichtung M weisend variieren kann.

Vorteilhaft sind die einzelnen Module 100, 200, 300 jeweils durch gattungsgemäße Module 100, 200, 300 ihrer Art austauschbar, so dass jedes Modul 100, 200, 300 jeweils durch ein gattungsgemäßes anderes Modul 100, 200, 300 ausgetauscht werden kann.

"Gattungsgemäßes Modul" beschreibt im Sinne der Erfindung die drei Modularten, Leistungsmodul 100, Funktionsmodul 200 und Bedienmodul 300.

In einer ersten Ausführung ist die Funktionssteuerungseinheit FS vorteilhaft derart ausgebildet, dass sie das Bediensignal BS verarbeiten und das Steuersignals SS erzeugen kann. Das Steuersignal SS ist dabei über Modulschnittstellen 102, 104, 202, 204, 302, 304 von dem Funktionsmodul an das Leistungsmodul übertragbar.

Gemäß einer weiteren vorteilhaften Ausführung weist das Leistungsmodul 100 eine mit der Funktionssteuerungseinheit FS des Funktionsmoduls 200 verbundene Steuereinheit auf. Diese Verbindung kann entsprechend der vorgenannten Ausführungen über die Modulschnittstellen 102, 104, 202, 204, 302, 304 erfolgen. Zweckmäßig ist die Steuereinheit derart ausgebildet, dass sie abhängig von der Funktionssteuerungseinheit FS das Bediensignal BS verarbeiten und das Steuersignal SS erzeugen kann.

Zweckmäßig ist das Funktionsmodul 200 zu diesem Zweck derart ausgebildet, dass es eine im Leistungsmodul 100 integrierte bzw. gespeicherte Funktionalität freischaltet. Bei der Funktionalität handelt es sich insbesondere um den Verarbeitungsprozess für das Bediensignal BS. Zu diesem Zweck ist in der Funktionssteuerungseinheit FS eine Gerätekennung/ID-Tag enthalten bzw. ist die Gerätekennung/ID-Tag über die Funktionssteuerungseinheit FS aus einem Speicher auslesbar. Vorteilhaft stellt das Funktionsmodul 200 mittels der Funktionssteuerungseinheit FS die Gerätekennung/den ID-Tag bereit, welche mittels einer im Leistungsmodul 100 ausgebildeten Leseeinheit erfasst wird. Zweckmäßig kann die Gerätekennung/ID-Tag über die Modulschnittstellen 102, 104, 202, 204, 302, 304, insbesondere eine Leistungsmodulschnittstelle 202 des Funktionsmoduls 200 und eine Funktionsmodulschnittstelle 102 des Leistungsmoduls 100 übertragen werden.

Vorteilhaft kann das Leistungsmodul 100 auf Basis der von der Funktionssteuerungseinheit FS bereitgestellten Gerätekennung/ID-Tags die jeweilige integrierte bzw. gespeicherte Funktionalität bereitstellen bzw. den Verarbeitungsprozess für das Bediensignal BS ausführen. Auf der Basis der Gerätekennung/ID-Tags wird dadurch in dem Leistungsmodul 100 sowohl das Steuersignal SS erzeugt als auch zweckmäßig der elektrische Verbraucher abhängig vom Steuersignal SS kontaktiert. Das Funktionsmodul 200 ist dadurch von funktionellen Anteilen entkoppelt und bestimmt mit der Gerätekennung/ID-Tag die Einstellung für den auszuführenden Verarbeitungsprozess für das Bediensignal BS.

Gemäß einer nicht dargestellten Ausführung weist das Leistungsmodul 100 elektrische Kontakte zur Kontaktierung einer BUS-Leitung auf. Vorzugsweise weist das Leistungsmodul 100 oder das Funktionsmodul 200, insbesondere die Funktionssteuerungseinheit FS, einen Bus-Controller zur Kommunikation über die BUS-Leitung und zur Übertragung eines BUS-Steuersignals zur Steuerung des elektrischen Verbrauchers über die BUS-Leitung auf. Insbesondere sind die Steuersignale SS von dem Bus-Controller in BUS-Steuersignale aufbereitbar, wobei die BUS-Steuersignale entweder unmittelbar von dem Leistungsmodul in die BUS-Leitung übertragen werden oder alternativ die BUS-Steuersignale zuerst an das Leistungsmodul 100 und dann über die elektrischen Kontakte in die BUS-Leitung übertragen werden. Diese Ausführung ermöglicht es, Schaltelemente oder andere Verarbeitungsgeräte, welche auf die BUS-Steuersignale reagieren, außerhalb des Elektroinstallationsgeräts 1 anzuordnen.

Weiterhin weist das Leistungsmodul 100 gemäß einer bevorzugten, ebenfalls nicht dargestellten Ausführung elektrische Kontakte zur Kontaktierung des elektrischen Verbrauchers und elektrische Schaltmittel zum direkten Schalten des elektrischen Verbrauchers auf. Diese Ausführung kann sowohl die elektrischen Kontakte zur Kontaktierung der BUS-Leitung ergänzen als auch als eine alternative Ausführung, insbesondere wenn keine BUS-Leitungen mit dem Leistungsmodul 100 kontaktiert sind, darstellen.

Insbesondere ist das Leistungsmodul 100 zum Anschluss an bekannte Hausnetze, wie insbesondere 110V oder 220V, Strom- bzw. Spannungsnetze, mit insbesondere 2-Leiter oder 3-Leiter Anschlüssen, oder z.B. KNX/EIB-Busanschlüsse, konfektioniert.

Vorteilhaft weist das Funktionsmodul 200 jeweils ein Haltemittel zum Verbinden mit dem Leistungsmodul 100 und zum Verbinden mit dem Bedienmodul 300 auf. Besonders vorteilhaft ist diese Ausführung bei einer Anordnung der jeweiligen Module 100, 200, 300 zueinander, wie sie in Fig. 2 dargestellt ist. Bei dieser Anordnung gemäß Fig. 3 ist das Funktionsmodul 200 in Montagerichtung M zwischen dem Leistungsmodul 100 und dem Bedienmodul 300 angeordnet. Zweckmäßig hat dabei das Funktionsmodul 200 Haltemittel für das Bedienmodul 300 gegen die Montagerichtung M weisend, als auch für das Leistungsmodul 100 in Montagerichtung M weisend, ausgebildet.

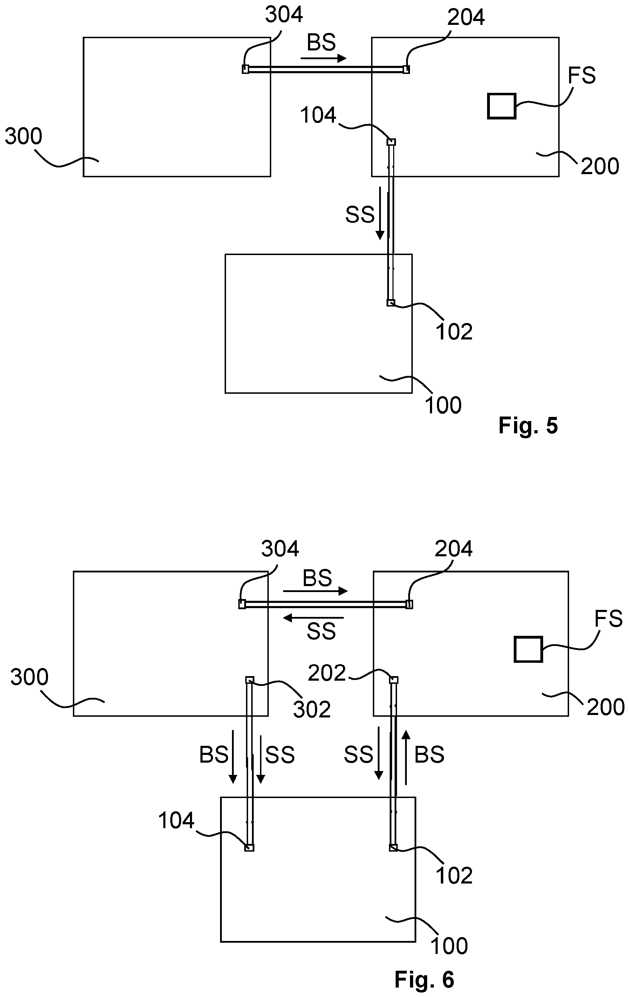

Eine vorteilhafte Verschaltung der Module 100, 200, 300 zueinander besteht darin, dass das Funktionsmodul 200 in Montagerichtung M zwischen dem Leistungsmodul 100 und dem Bedienmodul 300 angeordnet ist. Vorteilhaft ist dabei die Funktionsmodulschnittstelle 102 des Leistungsmoduls 100 mit der Leistungsmodulschnittstelle 202 des Funktionsmoduls 200 und eine Bedienmodulschnitte 204 des Funktionsmoduls 200 mit einer Funktionsmodulschnittstelle 304 des Bedienmoduls 300 verbindbar bzw. verbunden. Derartige Verbindungen der jeweiligen Schnittstellen zueinander sind zur Veranschaulichung in Fig. 5 dargestellt. Insbesondere sind die Module 100, 200, 300 bei Anordnungen der Module 100, 200, 300, wie sie in den Fig. 1 und 2 dargestellt sind, bevorzugt Fig. 2, derartig verschaltbar.

Eine weitere Modulanordnung ist in Fig. 1 dargestellt. Fig. 1 zeigt eine vorteilhafte Ausführung, gemäß welcher das Funktionsmodul 200 und das Bedienmodul 300 in einer gemeinsamen Ebene nebeneinander in Montagerichtung M auf dem Leistungsmodul 100 anordbar bzw. angeordnet sind. Insbesondere weist das Leistungsmodul 100 ein zweites Haltemittel zum Verbinden mit dem Bedienmodul 300 auf. Vorteilhaft ist dadurch das Funktionsmodul 200 und das Bedienmodul 300 jeweils mit dem Leistungsmodul 100 verbindbar, so dass das Leistungsmodul 100 als Träger für das Bedienmodul 300 und das Leistungsmodul 100 fungieren kann.

In Fig. 3 ist eine vorteilhafte Ausführung der Verschaltung der Module 100, 200, 300 des Elektroinstallationsgerätes 1 dargestellt. Insbesondere ist die Funktionsmodulschnittstelle 102 des Leistungsmoduls 100 mit der Leistungsmodulschnittstelle 202 des Funktionsmoduls 200 und eine Bedienmodulschnittstelle 104 des Leistungsmoduls 100 mit einer Leistungsmodulschnittstelle 302 des Bedienmoduls 300 elektrisch verbindbar bzw. entsprechend, wie in Fig. 3 dargestellt, verbunden. Insbesondere ist diese Ausführung der Verschaltung mit der Anordnung der Module 100, 200, 300, wie in Fig. 1 und 2 dargestellt, vorteilhaft kombinierbar, vorzugsweise mit der Anordnung der Module 100, 200, 300 entsprechend der Ausführung nach Fig. 1.

Eine bevorzugte alternative Schaltung ist in Fig. 4 dargestellt. Hierbei sind die Bedienmodulschnittstelle 104 des Leistungsmoduls 100 mit der Leistungsmodulschnittstelle 302 des Bedienmoduls 300 und die Funktionsmodulschnittstelle 304 des Bedienmoduls 300 mit der Bedienmodulschnittstelle 204 des Funktionsmoduls 200 elektrisch verbindbar bzw. verbunden. Insbesondere ist diese Ausführung der Verschaltung mit der Anordnung der Module 100, 200, 300, wie in Fig. 1 und 2 dargestellt, vorteilhaft kombinierbar, vorzugsweise mit der Anordnung der Module 100, 200, 300 entsprechend der Ausführung nach Fig. 1.

Gemäß einer weiteren Alternative sind die Funktionsmodulschnittstelle 102 des Leistungsmoduls 100 mit der Leistungsmodulschnittstelle 202 des Funktionsmoduls 200 und die Bedienmodulschnittstelle 104 des Leistungsmoduls 100 mit der Leistungsmodulschnittstelle 302 des Bedienmoduls 300 und die Funktionsmodulschnittstelle 304 des Bedienmoduls 300 mit der Bedienmodulschnittstelle 204 des Funktionsmoduls 200 elektrisch verbindbar bzw. verbunden. Zur Veranschaulichung ist die Verschaltung in Fig. 6 dargestellt. Weiterhin ist diese Ausführung der Verschaltung mit der Anordnung der Module 100, 200, 300, wie in Fig. 1 und 2 dargestellt, vorteilhaft kombinierbar, vorzugsweise mit der Anordnung der Module 100, 200, 300 entsprechend der Ausführung nach Fig. 1.

Gemäß einer weiteren Verbesserung, insbesondere bei einer Anordnung der Module 100, 200, 300 zueinander, wie sie in Fig. 1 dargestellt ist, weist das Leistungsmodul 100 ein zweites, nicht dargestelltes, Haltemittel zum Verbinden mit dem Bedienmodul 300 auf. Das zweite Haltemittel verbessert den Halt des Bedienmoduls 300 und insbesondere kann das Bedienmodul 300 dadurch unabhängig von dem Funktionsmodul 200 am Leistungsmodul 100 montiert und/oder befestigt werden.

Zweckmäßig hat sich als besonders vorteilhaft herausgestellt, dass die Funktionsmodulschnittstelle 102, 304 und/oder die Leistungsmodulschnittstelle 202, 302 und/oder die Bedienmodulschnittstelle 104, 204 als elektrische Steckkontakte, als kontaktlose induktive Schnittstelle oder Funk-basierte Schnittstelle ausgebildet sind.

Insbesondere ist eine bevorzugte Ausführung des Elektroinstallationsgeräts 1 dadurch gekennzeichnet, dass zumindest die Leistungsmodulschnittstelle 202, 302 und/oder die Bedienmodulschnittstelle 104, 204 und/oder die Funktionsmodulschnittstelle 102, 304 als erste Induktionsschnittstellen ausgebildet sind, wobei vorzugsweise die mit der ersten Induktionsschnittstelle zu verbindende Leistungsmodulschnittstelle 202, 302 oder die Bedienmodulschnittstelle 104, 204 oder die Funktionsmodulschnittstelle 102, 302 korrespondierend als zweite Induktionsschnittstelle ausgebildet ist. Induktive Schnittstellen haben besonders den Vorteil, dass die Montage beschleunigt und Fehler bei der Verkabelung bzw.

Kontaktierung verhindert werden. Weiterhin werden Kabelbrüche verhindert und der notwendige Bauraum verringert. Insbesondere ergeben sich diese Vorteile in unterschiedlichen Ausprägungen auch bei Ausführungen, bei denen die Schnittstellen als elektrische Steckkontakte, insbesondere elektrische leitende Stifte, oder Funk-basierte Schnittstellen ausgebildet ist. Vorteilhaft wird dadurch die Haltbarkeit des Elektroinstallationsgeräts 1 auch bei häufiger Wiedermontage gesteigert.

Zweckmäßig weisen die Funktionsmodulschnittstelle 102, 304, die Leistungsmodulschnittstelle 202, 302 und/oder die Bedienmodulschnittstelle 104, 204 sowohl Signalübertragungsmittel zum Übertragen des Bediensignals BS und/oder des Steuersignals SS und/oder einer Gerätekennung/ID-Tag als auch Energieübertragungsmittel zur Übertragung einer Versorgungsspannung für elektronische Komponenten des Funktionsmoduls 200 oder des Bedienmoduls 300 auf.

Gemäß einer nicht dargestellten, vorteilhaften Variante weist das Leistungsmodul 100 eine Spannungsversorgungselektronik auf. Insbesondere ist die Spannungsversorgungselektronik derart ausgebildet, dass sie eine Netzspannung oder BUS-Spannung in eine Gleichspannung als Versorgungsspannung von elektronischen Komponenten des Leistungsmoduls 100, des Funktionsmoduls 200 und/oder des Bedienmoduls 300 umwandeln kann. Zweckmäßig wird die Versorgungsspannung mit Energieübertragungsmitteln der Leistungsmodulschnittstelle und/oder die Bedienmodulschnittstelle an das Bedienmodul 300 und/oder das Funktionsmodul 200 übertragen.

Gemäß einer nicht dargestellten, besonderen Ausführung, weist das Funktionsmodul 200 Schaltelemente auf, die zumindest mit den elektrischen Kontakten des Leistungsmoduls 100 verbunden sind. Zweckmäßig sind die Schaltelemente durch das Steuersignal SS der Funktionssteuerungseinheit FS des Funktionsmoduls 200 steuerbar. Vorteilhaft kann gemäß dieser Ausführung mittels eines Austauschs des Funktionsmoduls 200 durch ein gattungsgemäßes anderes Funktionsmodul 200 die Funktion des Elektroinstallationsgerät 1 umfangreich geändert werden.

Gemäß einer weiteren, nicht dargestellten Variante weist das Leistungsmodul 100 Schaltelemente auf. Insbesondere sind die Schaltelemente des Leistungsmoduls 100 mit den elektrischen Kontakten des Leistungsmoduls 100 verbunden. Vorteilhaft sind die Schaltelemente mittels des Steuersignals SS der Funktionssteuerungseinheit FS oder der Steuereinheit des Leistungsmoduls 100steuerbar, wobei das Steuersignal SS an die Schaltelemente im Leistungsmodul 100 leitbar ist.

Insbesondere ermöglicht die Versorgungsspannung, das Funktionsmodul 200, insbesondere die Funktionssteuerungseinheit FS des Funktionsmoduls 200, und/oder das Bedienelement 306 des Bedienmoduls 300 mit einer elektrischen Spannung zu versorgen. Insbesondere berührungssensitive Bildschirme oder beleuchtete Taster können dadurch einfach mit der notwendigen Spannung versorgt werden.

Vorzugsweise sind die Schaltelemente über die Funktionssteuerungseinheit FS, insbesondere mit Unterstützung eines Mikroprozessors, ansteuerbar.

Vorteilhaft kann das Bedienmodul 300, wie in den Fig. 3 bis 6 dargestellt, das Bediensignal BS an das Funktionsmodul 200 oder das Leistungsmodul 100 übertragen bzw. ist das Bediensignal BS von dem Bedienmodul 300 über das Funktionsmodul 200 das Funktionsmodul 200 an übertragbar.

Insbesondere kann weiterhin das Funktionsmodul 200, wie in den Fig. 3 bis 6 dargestellt, das Steuersignal SS an das Leistungsmodul 100 übertragen bzw. ist das Steuersignal SS von dem Funktionsmodul 200 an das Leistungsmodul 100 übertragbar. Insbesondere ist das Steuersignal SS von dem Funktionsmodul 200 an das Leistungsmodul 100, insbesondere mittelbar über das Bedienmodul 300, wie in Fig. 4 und 6 dargestellt und/oder unmittelbar, wie in den Fig. 3, 5 und 6 dargestellt, übertragbar.

Zweckmäßig ist, bei der in Fig. 3 dargestellten Ausführung, das Bediensignal BS von dem Bedienmodul 300 über die Leistungsmodulschnittstelle 302 des Bedienmoduls 300 und die Bedienmodulschnittstelle 104 des Leistungsmoduls 100 an das Leistungsmodul 100, insbesondere die Steuereinheit übertragbar und/oder weiterführend über die Funktionsmodulschnittstelle 102 des Leistungsmoduls 100 und die Leistungsmodulschnittstelle 202 des Funktionsmoduls 200 an das Funktionsmodul 200 leitbar. Insbesondere sieht es diese Ausführung weiterhin vor, dass das Steuersignal SS über die Leistungsmodulschnittstelle 202 des Funktionsmoduls 200 und die Funktionsmodulschnittstelle 102 des Leistungsmoduls 100 an das Leistungsmodul 100 leitbar ist, so dass das Leistungsmodul 100 auf das Steuersignal SS hin den Verbraucher mittel- und/oder unmittelbar kontaktieren und/oder verschalten kann. Zudem kann die Versorgungsspannung von dem Leistungsmodul 100 über die Bedienmodulschnittstelle 104 des Leistungsmoduls 100 an das Bedienmodul 300 über die Leistungsmodulschnittstelle 302 des Bedienmoduls 300 und/oder an das Funktionsmodul 200 über die Funktionsmodulschnittstelle 102 des Leistungsmoduls 100 und die Leistungsmodulschnittstelle 202 des Funktionsmoduls 200 angelegt werden.

Vorteilhaft ist, bei der in Fig. 5 dargestellten Ausführung, das Bediensignal BS von dem Bedienmodul 300 über die Funktionsmodulschnittstelle 304 des Bedienmoduls 300 und die Bedienmodulschnittstelle 204 des Funktionsmoduls 200 leitbar. Bevorzugt ist das Steuersignal SS von dem Funktionsmodul 200 über die Leistungsmodulschnittstelle 202 des Funktionsmoduls 200 und die Funktionsmodulschnittstelle 102 des Leistungsmoduls 100 an das Leistungsmodul 100 leitbar. Zweckmäßig ist die Versorgungsspannung von dem Leistungsmodul 100 über die Funktionsmodulschnittstelle 102 des Leistungsmoduls 100 und die Leistungsmodulschnittstelle 202 des Funktionsmoduls 200 an das Funktionsmodul 200 übertragbar. Bevorzugt ist weiterhin die Versorgungsspannung von dem Funktionsmodul 200 über die Bedienmodulschnittstelle 204 des Funktionsmoduls 200 an das Bedienmodul 300 über die Funktionsmodulschnittstelle 304 des Bedienmoduls 300 übertragbar.

Insbesondere ist, bei der in Fig. 4 dargestellten Ausführung, das Steuersignal SS von dem Funktionsmodul 200 über die Bedienmodulschnittstelle 204 des Funktionsmoduls 200 und die Funktionsmodulschnittstelle 304 des Bedienmoduls 300 an das Bedienmodul 300 und über die Leistungsmodulschnittstelle 302 des Bedienmoduls 300 und die Bedienmodulschnittstelle 104 des Leistungsmoduls 100 an das Leistungsmodul 100 leitbar. Weiterhin ist das Bediensignal BS vorzugsweise über die Funktionsmodulschnittstelle 304 des Bedienmoduls 300 und die Bedienmodulschnittstelle 204 des Funktionsmoduls 200 an das Funktionsmodul 200, bzw. die Funktionssteuerungseinheit FS zur Verarbeitung des Bediensignals BS und Erzeugung eines Steuersignals SS leitbar. Bevorzugt ist dabei die Versorgungsspannung von dem Leistungsmodul 100 über die Bedienmodulschnittstelle 104 des Leistungsmoduls 100 und die Leistungsmodulschnittstelle 302 des Bedienmoduls 300 an das Bedienmodul 300 anlegbar, wobei zweckmäßig das Bedienmodul 300 das Funktionsmodul 200 mit der Versorgungsspannung über die Funktionsmodulschnittstelle 304 des Bedienmoduls 300 und die Bedienmodulschnittstelle 204 des Funktionsmoduls 200 beaufschlagen kann bzw. beaufschlagt.

Vorteilhaft ist, bei der in Fig. 6 dargestellten Ausführung, das Bediensignal BS von dem Bedienmodul 300 über die Funktionsmodulschnittstelle 304 des Bedienmoduls 300 und die Bedienmodulschnittstelle 204 des Funktionsmoduls 200 an das Funktionsmodul 200 und/oder über die Leistungsmodulschnittstelle 302 des Bedienmoduls 300 und die Bedienmodulschnittstelle 104 des Leistungsmoduls 100 an das Leistungsmodul 100, insbesondere die Steuereinheit des Leistungsmoduls 100 und/oder weiterführend von dem Leistungsmodul 100 über die Funktionsmodulschnittstelle 102 des Leistungsmoduls 100 und die Leistungsmodulschnittstelle 202 des Funktionsmoduls 200 an das Funktionsmodul 200 leitbar. Zweckmäßig ist die Versorgungsspannung ausgehend von dem Leistungsmodul 100 über die Bedienmodulschnittstelle 104 des Leistungsmoduls 100 und die Leistungsmodulschnittstelle 302 des Bedienmoduls 300 an das Bedienmodul 300 anlegbar und über die Funktionsmodulschnittstelle 102 des Leistungsmoduls 100 und die Leistungsmodulschnittstelle 202 des Funktionsmoduls 200 an das Funktionsmodul 200 anlegbar. Insbesondere ist die Versorgungsspannung hierbei auch von dem Leistungsmodul 100 über die Bedienmodulschnittstelle 104 des Leistungsmoduls 100 oder die Funktionsmodulschnittstelle 102 des Leistungsmoduls 100 und die Leistungsmodulschnittstelle 302 des Bedienmoduls 300 oder die Leistungsmodulschnittstelle 202 des Funktionsmoduls 200 an das Bedienmodul 300 oder das Funktionsmodul 200 übertragbar und zweckmäßig von dem Bedienmodul 300 oder dem Funktionsmodul 200 aus über die Funktionsmodulschnittstelle 304 des Bedienmoduls 300 und die Bedienmodulschnittstelle 204 des Funktionsmoduls 200 an das Funktionsmodul 200 oder das Bedienmodul 300 übertragbar.

Insbesondere sind das Leistungsmodul 100, das Funktionsmodul 200 und das Bedienmodul 300 zur Versorgung mit der Versorgungsspannung in Reihe schaltbar. Alternativ kann vorgesehen sein, dass das Funktionsmodul 200 und das Bedienmodul 300 zueinander parallel mit dem Leistungsmodul 100 schaltbar sind.

Gemäß einer nicht dargestellten Ausführung weisen vorzugsweise das Leistungsmodul 100 und/oder das Bedienmodul 300 und/oder das Funktionsmodul 200 einen RFID-Chip auf. Zweckmäßig ist zumindest eine Gerätekennung des jeweiligen Leistungsmoduls 100 oder Bedienmoduls 300 oder Funktionsmoduls 200 aus dem RFID-Chip auslesbar. Vorzugsweise kann der RFID-Chip eine Gerätekennung/ID-Tag des Funktionsmoduls 200 insbesondere dem Leistungsmodul 100 zur Bestimmung des Verarbeitungsprozesses für das Bediensignal BS zur Verfügung stellen, wobei der vorteilhaft als RFID-Chip als Teil der Funktionssteuerungseinheit FS ausgebildet ist oder zweckmäßig unmittelbar mit der Funktionssteuerungseinheit FS verbunden ist. Weiterhin ist vorteilhaft zumindest eine RFID-Leseeinheit in dem Leistungsmodul 100 und/oder dem Funktionsmodul 200 und/oder dem Bedienmodul 300 ausgebildet.

Insbesondere weist das Elektroinstallationsgerät 1 einen, nicht dargestellten, Mikrocontroller auf, welcher mit der Funktionssteuereinheit FS verbunden ist oder selbst ganz oder teilweise die Funktionssteuerungseinheit FS bildet. Zweckmäßig wertet der Mikrocontroller die Gerätekennung aus und ist in der Lage, bestimmte Parameter betreffend das Steuersignal SS und das Bediensignal BS und/oder die Versorgungsspannung der Module 100, 200, 300 anhand der Gerätekennung einzustellen, insbesondere selbstständig einzustellen.

Zweckmäßig weist das Leistungsmodul 100 die mit der Funktionssteuerungseinheit FS des Funktionsmoduls 200 verbundene Steuereinheit auf. Die Steuereinheit kann dabei insbesondere über die Modulschnittstellen und/oder eine RFID-Verbindung mit der Funktionssteuereinheit FS verbunden sein. Vorteilhaft weist die Steuereinheit zur Verarbeitung der Gerätekennung/ID den Mikrocontroller auf, so dass die Steuereinheit abhängig von der Funktionssteuerungseinheit FS das Bediensignal BS verarbeiten und das Steuersignal SS erzeugen kann.

Vorteilhaft kann das Funktionsmodul 200 mit der RFID-Leseeinheit, insbesondere mittels des Mikrocontrollers, das Leistungsmodul 100 und/oder das Bedienmodul 300 erkennen, das Bediensignal BS entsprechend dem Bedienmodul 300 angepasst auswerten und entsprechend dem Leistungsmodul 100 angepasst weiterverarbeiten. Weiterhin kann es die Versorgungsspannung bedarfsgerecht an die angeschlossenen Module 100, 200, 300 anpassen bzw. steuern. Insbesondere entfällt dadurch ein Anlernen der jeweiligen Module 100, 200, 300 und erleichtert, insbesondere für ungelernte Anwender, die Montage und Inbetriebnahme. Eine vorteilhafte Weiterentwicklung des Elektroinstallationsgeräts 1 ist dadurch gekennzeichnet, dass das Funktionsmodul 200 und/oder das Leistungsmodul 100 den Mikrocontroller aufweist. Vorzugsweise ist der Mikrocontroller einerseits mit einem Speicher verbunden. Zweckmäßig ist der Mikrocontroller andererseits mit der Funktionssteuerungseinheit FS verbunden oder bildet selbst ganz oder teilweise die Funktionssteuerungseinheit FS. Vorzugsweise ist auf dem Speicher zumindest ein Steuerprozess, insbesondere Verarbeitungsprozess zur Verarbeitung zumindest eines Bediensignals BS und Erzeugung zumindest eines speziellen Steuersignals SS und/oder zur Bereitstellung zumindest einer speziellen Versorgungsspannung gespeichert.

Zweckmäßig hat der Speicher auf verschiedene Leistungsmodule 100 und/oder Bedienmodule 300 angepasste Steuerprozesse, insbesondere Verarbeitungsprozesse zur Verarbeitung von unterschiedlichen Bediensignalen BS und/oder zur Erzeugung unterschiedlicher Steuersignale SS und/oder zur Bereitstellung von unterschiedlichen speziellen Versorgungsspannungen gespeichert. Diese Ausführung hat die Besonderheit, dass ein Funktionsmodul 200 in unterschiedlichen Kombinationen von Leistungsmodulen 100 und/oder Bedienmodulen 300 verwendbar ist bzw. anpassbar ist. Der Vorteil besteht unter anderem darin, dass das Funktionsmodul 200 selbst in unterschiedliche Elektroinstallationsgeräte 1 eingesetzt werden kann oder das Leistungsmodul 100 und/oder das Bedienmodul 300 unter Wahrung der vorgesehenen Funktion des neuen Leistungsmoduls 100 und/oder des neuen Bedienmoduls 300 auswechselbar sind.

Gemäß einer nicht dargestellten bevorzugten Ausführung weist das Funktionsmodul 200 und/oder das Leistungsmodul 100 und/oder das Bedienmodul 300 eine mit dem Mikrocontroller verbundene Wartungsschnittstelle zum Verbinden mit einer externen Lese- und Schreibeinheit auf. Besonders vorteilhaft ist die Lese- und Schreibeinheit derart ausgebildet und mit dem Mikrocontroller über die Wartungsschnittstelle verbindbar, dass die Lese- und Schreibeinheit die auf dem Speicher gespeicherten Steuerprozesse bearbeiten und/oder ergänzen kann. Insbesondere sind mittels der Wartungsschnittstelle Steuerprozesse änderbar und ergänzbar. Zudem lässt sich die Software des Funktionsmoduls 200 updaten, insbesondere zur Behebung von Softwarefehlern, Funktionsverbesserungen der Steuerprozesse und/oder zur Behebung von Sicherheitslücken.

Gemäß einer Ausführung ist mittels der Wartungsschnittstelle lediglich der Speicher auslesbar. Vorteilhaft ist diese Variante, um beispielsweise die Kompatibilität des Funktionsmoduls 200 mit anderen Leistungsmodulen 100 oder Bedienmodulen 300 zu überprüfen, beispielsweise mittels der gespeicherten Steuerprozesse.

In einer nicht dargestellten Variante weist das Bedienmodul 300 vorzugsweise mehr als ein Bedienelement 306 auf. Zweckmäßig ist das Bedienmodul 300 derart ausgebildet, dass bei Betätigung der unterschiedlichen Bedienelemente 306 die Bedienelemente 306 jeweils ein eigenes Bediensignal BS erzeugen, welche an das Funktionsmodul 200 und/oder das Leistungsmodul 100 gesendet werden können.

Insbesondere ist die Funktionssteuerungseinheit FS oder die Steuereinheit des Leistungsmoduls 100 derart ausgebildet, dass sie zwischen den Bediensignalen BS der jeweiligen Bedienelemente 306 unterscheiden kann.

Beispielsweise kann ein derartiges Bedienmodul 300 in Form von zumindest zwei Wippenschaltern, z. B. in einem Treppenhaus, ausgebildet sein, wobei jeder Wippenschalter ein Bedienelement 306 darstellt. Ebenfalls kann ein derartiges Bedienmodul 300 auch eine Türklingeleinheit mit mehreren Klingeltastern sein, wobei jeder Klingeltaster hier einem Bedienelement 306 entspricht.

Fig. 1 und 2 zeigen eine vorteilhafte Ausführung, die dadurch gekennzeichnet ist, dass das Bedienelement 306 des Bedienmoduls 300 aktiv von einem Anwender betätigt werden kann. Vorzugsweise kann das Bedienmodul 300 als Reaktion auf die Betätigung zumindest ein Bediensignal BS an das Funktionsmodul 200 oder das Leistungsmodul 100 senden, bzw. sendet als Reaktion auf die Betätigung zumindest ein Bediensignal BS an das Funktionsmodul 200 oder das Leistungsmodul 100.

Insbesondere ist unter einem aktiv betätigbaren Bedienelement 306 ein Bedienelement 306 zu verstehen, bei dem sich der Anwender bewusst zum Betätigen entscheidet bzw. eine Aktion ausführen muss. Dies kann beispielsweise ein Tastschalter oder ein Drehregler, wie bei einem Dimmer, oder ein Funkempfänger sein.

Weiterhin ist das Bedienelement 306 vorzugsweise druckempfindlich, z. B. wie in den Fig. 1 und 2 dargestellt, als eine Drucktaste, eine Wippe oder eine berührungsempfindliche Displayoberfläche ausgebildet, oder ist zweckmäßig als ein Empfänger, z. B. als ein Infrarotempfänger, ein RFID-Empfänger oder ein Funkempfänger ausgebildet. Die Ausführungsvariante des Bedienelements 306 als Empfänger ist nicht dargestellt. Insbesondere ist ein Empfänger mit der Funktionssteuerungseinheit FS oder der Steuereinheit des Leistungsmoduls verbunden, wobei das Bediensignal BS in Form der empfangenen Daten an die Funktionssteuerungseinheit FS oder die Steuereinheit des Leistungsmoduls 100 übermittelt wird und dort ausgewertet und zu einem Steuersignal SS verarbeitet wird. Insbesondere geschieht dies mittels des Mikroprozessors.

In einer alternativen Ausführung ist das Bedienelement 306 als ein Umgebungssensor ausgebildet. Besonders vorteilhaft ist der Umgebungssensor als ein Thermometer oder ein Lichtsensor oder ein Bewegungssensor ausgebildet, wobei insbesondere die Auswahl an möglichen Sensoren nicht auf die genannten beschränkt ist.

Insbesondere Elektroinstallationsgeräte 1, die mehr als ein Bedienelement 306 bzw. Bedienmodul 300 aufweisen, können verschiedene Typen von Bedienelementen 306 aufweisen, insbesondere ist die Auswahl der Bedienelemente 306 nicht auf die vorgenannten Typen von Bedienelementen 306 - druckempfindliches Bedienelement 306, Empfänger, Umgebungssensor - beschränkt. Insbesondere kann das Funktionsmodul 200 oder die Steuereinheit des Leistungsmoduls 100 auch bestimmte Steuersignale SS an eine Kombination von Bediensignalen BS, insbesondere unterschiedlicher Bedienelemente 306 bzw. Bedienmodule 300, verknüpfen, so das beispielsweise das synchrone Betätigen zweier Bedienelemente 306 ein anderes Steuersignal SS erzeugt als das Betätigen der jeweiligen Bedienelemente 306 einzeln, oder dass beispielsweise ein aktiv zu betätigendes Bedienelement 306 in Abhängigkeit von den Messdaten eines Umgebungssensors unterschiedliche Steuersignale SS generiert. Insbesondere lässt sich durch die Verarbeitung zumindest zweier Bediensignale BS eine Zwei- oder Mehr-Faktor-Authentifizierung bereitstellen. Beispielsweise wird ein erstes Bediensignal BS durch eine korrekte Codeeingabe erzeugt, während ein zweites Bediensignal BS durch eine RFID-Abfrage erzeugt wird, insbesondere werden die beiden Bediensignale BS in der Funktionssteuerungseinheit FS oder die Steuereinheit des Leistungsmoduls 100, insbesondere mittels des Mikrocontrollers, verarbeitet und ein Steuerprozess ausgelöst. In diesem Sinne kann auch zweckmäßig ein erstes Bedienelement 306 als ein aktives Bedienelement 306, beispielsweise eine Taste zur Etagenwahl eines Aufzuges, und ein zweites Bedienelement 306 als ein Rauchmeldesensor ausgebildet sein, so dass beispielsweise im Brandfall keine Etagenwahl bzw. Aufzugnutzung mehr möglich ist.

Zweckmäßig sind die Haltemittel zumindest teilweise als ein mechanisches und/oder magnetisches Haltemittel ausgebildet. **In** einer vorteilhaften Variante sind die Haltemittel zumindest teilweise als lösbare Verschraubung ausgebildet. Insbesondere ist jedem Haltemittel ein Gegenhaltemittel an dem zu befestigenden Modul 100, 200, 300 zugeordnet. Beispielsweise ist dem als Verschraubung ausgebildeten Haltemittel ein Gegenhaltemittel zugeordnet, wobei das Gegenhaltemittel korrespondierend zum Haltemittel ausgebildet ist, so dass zumindest das Haltemittel als Schraube und das Gegenhaltemittel als Schraubenaufnahme ausgebildet ist.

Zweckmäßig ist ebenfalls, wenn die Haltemittel zumindest teilweise als Klemm- oder Rastmittel ausgebildet sind. Vorzugsweise ist dabei ein Gegenhaltemittel korrespondierend zu dem Haltemittel ausgebildet, insbesondere so, dass zumindest ein Haltemittel als Rast- oder Klemmarm und das Gegenhaltemittel als Rast- oder Klemmarmaufnahme korrespondierend ausgebildet ist.

Zweckmäßig können die Gehäuseeinheiten der Module eine auf die Gattung angepasste Kontur aufweisen, so dass beispielsweise alle Bedienmodule 300 eine gleiche äußere Form aufweisen, alle Funktionsmodule 200 eine gleiche äußere Form aufweisen und alle Leistungsmodule 100 eine gleiche äußere Form aufweisen. Insbesondere unterstützt diese Ausführung den leichten Austausch gattungsgleicher Module 100, 200, 300 und gewährleistet einen ausreichenden Bauraum im Elektroinstallationsgerät 1 ohne Nachmessungen.

Zweckmäßig kann das Bedienmodul 300 und/oder das Funktionsmodul 200 und/oder das Leistungsmodul 100 eine Montagekodierung aufweisen, welche die Montagerichtung M oder die relative Einbaulage des jeweiligen Moduls 100, 200, 300 zu dem Elektroinstallationsgerät 1 bzw. zu den jeweils anderen Modulen 100, 200, 300 anzeigt. Dadurch wird die Montage erleichtert und Fehlern vorgebeugt.

Vorteilhaft sind die, vorzugsweise magnetischen, Haltemittel und Gegenhaltemittel derart an den jeweiligen Modulen angeordnet, dass die Befestigung ausschließlich bei lagerichtigem Aufsetzen zustande kommt. Dies kann beispielsweise mittels der Auswahl der Polung bei magnetischen Haltemitteln und Gegenhaltemitteln erreicht werden, so dass es bei der lagerichtigen Positionierung zwischen dem jeweiligen Haltemittel und dem Gegenhaltemittel zur gewünschten Anziehung kommt und bei einem verdrehten Montageversuch zur Abstoßung. Vorteilhaft ist dadurch ein symmetrischer Aufbau der Module bei Wahrung einer hohen Montagesicherheit bereitstellbar.

Insbesondere weisen die Gehäuseeinheit des Bedienmoduls 300 und/oder des Funktionsmoduls 200 und/oder des Leistungsmoduls 100 eine äußere Form mit einer Montagekontur auf, so dass die jeweiligen Module 100, 200, 300 lediglich in einer für sie vorgesehenen Einbaulage montierbar sind und abweichende Einbaulagen, insbesondere durch eine formschlüssige Blockade, verhindert werden. Zweckmäßig weisen alle Gehäuseeinheiten einer Modulgattung die gleiche Montagekontur auf, um einen unkomplizierten Austausch bzw. Wiedermontage zu gewährleisten.

Montagemittel im Sinne der Erfindung können vorteilhaft mechanisch und/oder magnetisch ausgebildet sein. Insbesondere können die Montagemittel als eine Verschraubung oder eine Krallenanordnung zur Verkeilung des Leistungsmoduls 100 mit der Einbauöffnung ausgebildet sein.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Elektroinstallationsgerät
- 100: Leistungsmodul
- 102: Funktionsmodulschnittstelle des Leistungsmoduls
- 104: Bedienmodulschnittstelle des Leistungsmoduls
- 200: Funktionsmodul
- 202: Leistungsmodulschnittstelle des Funktionsmoduls
- 204: Bedienmodulschnittstelle des Funktionsmoduls
- 300: Bedienmodul
- 302: Leistungsmodulschnittstelle des Bedienmoduls
- 304: Funktionsmodulschnittstelle des Bedienmoduls
- 306: Bedienelement

- FS: Funktionssteuerungseinheit
- SS: Steuersignal
- BS: Bediensignal

- M: Montagerichtung

## Patentansprüche

1. Elektroinstallationsgerät (1) zur Steuerung eines elektrischen Verbrauchers, aufweisend ein Leistungsmodul (100), mindestens ein Funktionsmodul (200) und mindestens ein Bedienmodul (300),
wobei das Leistungsmodul (100) elektrische Kontakte zur Kontaktierung einer Spannungsquelle und zumindest ein Montagemittel zur Montage an einer Wand, insbesondere in einer Einbauöffnung, aufweist,
wobei das Funktionsmodul (200) eine Funktionssteuerungseinheit (FS) zur Bestimmung eines Verarbeitungsprozesses für ein Bediensignal (BS) zur Erzeugung des Steuersignals (SS) und mindestens ein Haltemittel zur lösbaren Befestigung mit dem Leistungsmodul (100) aufweist,
wobei das Bedienmodul (300) ein Bedienelement (306) zur Generierung des Bediensignals (BS) und ein Haltemittel zur lösbaren Befestigung des Bedienmoduls (300) mit dem Leistungsmodul (100) oder dem Funktionsmodul (200) aufweist, und das Funktionsmodul (200), das Bedienmodul (300) und das Leistungsmodul (100) zueinander jeweils als eine für sich abgeschlossene Gehäuseeinheit ausgebildet sind,
**dadurch gekennzeichnet, dass** das Leistungsmodul (100) mindestens ein Haltemittel zur lösbaren Befestigung eines Funktionsmoduls (200) aufweist und die einzelnen Module (100, 200, 300) jeweils durch gattungsgemäße Module ihrer Art austauschbar sind, so dass ein erstes Bedienmodul (300), durch ein gattungsgemäßes zweites Bedienmodul unabhängig von dem Funktionsmodul (200) ausgetauscht werden kann.

2. Elektroinstallationsgerät (1) nach Anspruch 1,
**dadurch gekennzeichnet, dass** die Funktionssteuerungseinheit (FS) derart ausgebildet ist, dass sie das Bediensignal (BS) verarbeiten und das Steuersignal (SS) erzeugen kann.

3. Elektroinstallationsgerät (1) nach Anspruch 1,
**dadurch gekennzeichnet, dass**
das Leistungsmodul (100) eine Steuereinheit aufweist, die in Abhängigkeit von einer von der Funktionssteuerungseinheit (FS) des Funktionsmoduls (100) empfangenen Gerätekennung/ID-Tag das Bediensignal (BS) verarbeiten und das Steuersignal (SS) erzeugen kann.

4. Elektroinstallationsgerät (1) nach einem der Ansprüche 1 bis 3,
**dadurch gekennzeichnet, dass**
das Leistungsmodul (100) elektrische Kontakte zur Kontaktierung einer BUS-Leitung und einen BUS-Controller zur Kommunikation über die BUS-Leitung und zur Übertragung eines BUS-Steuersignals zur Steuerung des elektrischen Verbrauchers über die BUS-Leitung aufweist.

5. Elektroinstallationsgerät (1) nach einem der Ansprüche 1 bis 4,
**dadurch gekennzeichnet, dass**
das Leistungsmodul (100) elektrische Kontakte zur Kontaktierung des elektrischen Verbrauchers und elektrische Schaltmittel zum direkten Schalten des elektrischen Verbrauchers aufweist.

6. Elektroinstallationsgerät (1) nach einem der Ansprüche 1 bis 5,
**dadurch gekennzeichnet, dass**
das Funktionsmodul (200) jeweils ein Haltemittel zum Verbinden mit dem Leistungsmodul (100) und zum Verbinden mit dem Bedienmodul (300) aufweist.

7. Elektroinstallationsgerät (1) nach einem der Ansprüche 1 bis 6,
**dadurch gekennzeichnet, dass**
das Funktionsmodul (200) in eine Montagerichtung (M) weisend zwischen dem Leistungsmodul (100) und dem Bedienmodul (300) angeordnet ist, und eine Funktionsmodulschnittstelle (102) des Leistungsmoduls (100) mit einer Leistungsmodulschnittstelle (202) des Funktionsmoduls (200) und eine Bedienmodulschnitte (204) des Funktionsmoduls (200) mit einer Funktionsmodulschnittstelle (304) des Bedienmoduls (300) verbindbar sind.

8. Elektroinstallationsgerät (1) nach einem der Ansprüche 1 bis 5,
**dadurch gekennzeichnet, dass**
das Funktionsmodul (200) und das Bedienmodul (300) in einer gemeinsamen Ebene nebeneinander in eine Montagerichtung (M) weisend auf dem Leistungsmodul (100) anordenbar sind.

9. Elektroinstallationsgerät (1) nach Anspruch 8,
**dadurch gekennzeichnet, dass**
eine Funktionsmodulschnittstelle (102) des Leistungsmoduls (100) mit einer Leistungsmodulschnittstelle (202) des Funktionsmoduls (200) und eine Bedienmodulschnittstelle (104) des Leistungsmoduls (100) mit einer Leistungsmodulschnittstelle (302) des Bedienmoduls (300) elektrisch verbindbar sind.

10. Elektroinstallationsgerät (1) nach Anspruch 8,
**dadurch gekennzeichnet, dass**
eine Funktionsmodulschnittstelle (102) des Leistungsmoduls (100) mit einer Leistungsmodulschnittstelle (202) des Funktionsmoduls (200) und eine Bedienmodulschnittstelle (204) des Funktionsmoduls (200) mit einer Funktionsmodulschnittstelle (302) des Bedienmoduls (300) elektrisch verbindbar sind.

11. Elektroinstallationsgerät (1) nach Anspruch 8,
**dadurch gekennzeichnet, dass**
eine Funktionsmodulschnittstelle (102) des Leistungsmoduls (100) mit einer Leistungsmodulschnittstelle (202) des Funktionsmoduls (200) und eine Bedienmodulschnittstelle (104) des Leistungsmoduls (100) mit einer Leistungsmodulschnittstelle (302) des Bedienmoduls (300) und eine eine Funktionsmodulschnittstelle (304) des Bedienmoduls (300) mit einer Bedienmodulschnittstelle (204) des Funktionsmoduls (200) elektrisch verbindbar sind.

12. Elektroinstallationsgerät (1) nach einem der Ansprüche 7 bis 11,
**dadurch gekennzeichnet, dass**
zumindest die Funktionsmodulschnittstelle (102, 304) und/oder die Leistungsmodulschnittstelle (202, 302) und/oder die Bedienmodulschnittstelle (104, 204) als elektrische Steckkontakte, als kontaktlose induktive Schnittstelle oder Funk-basierte Schnittstelle ausgebildet sind.

13. Elektroinstallationsgerät (1) nach einem der Ansprüche 7 bis 12,
**dadurch gekennzeichnet, dass**
die Funktionsmodulschnittstelle (102, 304), die Leistungsmodulschnittstelle (202, 302) und/oder die Bedienmodulschnittstelle (104, 204) sowohl Signalübertragungsmittel zum Übertragen des Bediensignals (BS) und/oder des Steuersignals (SS) als auch Energieübertragungsmittel zur Übertragung einer Versorgungsspannung für elektronische Komponenten des Funktionsmoduls (200) oder des Bedienmoduls (300) aufweisen.

14. Elektroinstallationsgerät (1) nach einem der vorherigen Ansprüche,
**dadurch gekennzeichnet, dass**
das Leistungsmodul (100) und/oder das Bedienmodul (300) und/oder das Funktionsmodul (200) einen RFID-Chip aufweist, wobei zumindest eine Gerätekennung des jeweiligen Leistungsmoduls (100), Funktionsmoduls (200) oder Bedienmoduls (300) aus dem RFID-Chip auslesbar ist und zumindest eine RFID-Leseeinheit in dem Leistungsmodul (100) und/oder dem Funktionsmodul (200) und/oder dem Bedienmodul (300) ausgebildet ist.

15. Elektroinstallationsgerät (1) nach einem der vorherigen Ansprüche,
**dadurch gekennzeichnet, dass**
das Funktionsmodul (200) und/oder das Leistungsmodul (100) einen Mikrocontroller aufweist, welcher einerseits mit einem Speicher und andererseits mit der Funktionssteuerungseinheit (FS) verbunden ist oder ganz oder teilweise die Funktionssteuerungseinheit (FS) bildet, wobei auf dem Speicher zumindest ein Steuerprozess zur Verarbeitung zumindest eines Bediensignals (BS) und zur Erzeugung zumindest eines speziellen Steuersignals (SS) und/oder zur Bereitstellung zumindest einer speziellen Versorgungsspannung gespeichert ist, insbesondere dass der Speicher auf verschiedene Leistungsmodule (100) und/oder Bedienmodule (300) angepasste Steuerprozesse zur Verarbeitung von unterschiedlichen Bediensignalen (BS) und/oder zur Erzeugung unterschiedlicher Steuersignale (SS) und/oder zur Bereitstellung von unterschiedlichen speziellen Versorgungsspannungen gespeichert hat.

16. Elektroinstallationsgerät (1) nach Anspruch 15,
**dadurch gekennzeichnet, dass**
das Funktionsmodul (200) und/oder das Leistungsmodul (100) und/oder das Bedienmodul (300) eine mit dem Mikrocontroller verbundene Wartungsschnittstelle zum Verbinden mit einer externen Lese- und Schreibeinheit aufweist, welche die auf dem Speicher gespeicherten Steuerprozesse bearbeiten und/oder ergänzen kann.

17. Elektroinstallationsgerät (1) nach einem der vorherigen Ansprüche,
**dadurch gekennzeichnet, dass**
das Bedienmodul (300) mehr als ein Bedienelement (306) aufweist, welche bei Betätigung jeweils ein eigenes Bediensignal (BS) erzeugen, welche an das Funktionsmodul (200) gesendet werden können, wobei die Funktionssteuerungseinheit (FS) zwischen den Bediensignalen (BS) der jeweiligen Bedienelemente (306) unterscheiden kann.

18. Elektroinstallationsgerät (1) nach einem der vorherigen Ansprüche,
**dadurch gekennzeichnet, dass**
das Bedienelement (306) ein Umgebungssensor ist, insbesondere der Umgebungssensor als ein Thermometer oder ein Lichtsensor oder ein Bewegungssensor ausgebildet ist.

## Claims

1. Electrical installation device (1) for controlling an electrical consumer, having a power module (100), at least one function module (200) and at least one operating module (300),
wherein the power module (100) has electrical contacts for contacting a voltage source and at least one mounting means for mounting on a wall, in particular in an installation opening,
wherein the function module (200) comprises a function control unit (FS) for determining a processing process for an operating signal (BS) for generating the control signal (SS) and at least one holding means for detachable attachment to the power module (100),
wherein the operating module (300) has an operating element (306) for generating the operating signal (BS) and a holding means for detachably fastening the operating module (300) to the power module (100) or the function module (200), and the function module (200), the operating module (300) and the power module (100) are each designed as a self-contained housing unit in relation to one another,
**characterized in that** the power module (100) has at least one holding means for releasably securing a function module (200) and the individual modules (100, 200, 300) can each be replaced by modules of their type, so that a first operating module (300) can be replaced by a second operating module of the type independently of the function module (200).

2. Electrical installation device (1) according to claim 1,
**characterized in that**
the function control unit (FS) is designed in such a way that it can process the operating signal (BS) and generate the control signal (SS).

3. Electrical installation device (1) according to claim 1,
**characterized in that**
the power module (100) has a control unit which can process the operating signal (BS) and generate the control signal (SS) depending on a device identifier/ID tag received from the function control unit (FS) of the function module (100).

4. Electrical installation device (1) according to any one of claims 1 to 3,
**characterized in that**
the power module (100) has electrical contacts for contacting a BUS line and a BUS controller for communication via the BUS line and for transmitting a BUS control signal for controlling the electrical consumer via the BUS line.

5. Electrical installation device (1) according to any one of claims 1 to 4,
**characterized in that**
the power module (100) has electrical contacts for contacting the electrical consumer and electrical switching means for directly switching the electrical consumer.

6. Electrical installation device (1) according to any one of claims 1 to 5,
**characterized in that**
the function module (200) each has a holding means for connecting to the power module (100) and for connecting to the operating module (300).

7. Electrical installation device (1) according to any one of claims 1 to 6, **characterized in that**
the function module (200) is arranged pointing in a mounting direction (M) between the power module (100) and the operating module (300), and a function module interface (102) of the power module (100) is connected to a power module interface (202) of the function module (200),
and an operating module interface (204) of the function module (200) can be connected to a function module interface (304) of the operating module (300).

8. Electrical installation device (1) according to any one of claims 1 to 5,
**characterized in that**
the function module (200) and the operating module (300) can be arranged in a common plane next to one another on the power module (100), pointing in a mounting direction (M).

9. Electrical installation device (1) according to claim 8,
**characterized in that**
a function module interface (102) of the power module (100) can be electrically connected to a power module interface (202) of the function module (200) and an operating module interface (104) of the power module (100) can be electrically connected to a power module interface (302) of the operating module (300).

10. Electrical installation device (1) according to claim 8,
**characterized in that**
a function module interface (102) of the power module (100) can be electrically connected to a power module interface (202) of the function module (200) and an operating module interface (204) of the function module (200) can be electrically connected to a function module interface (302) of the operating module (300).

11. Electrical installation device (1) according to claim 8,
**characterized in that**
a function module interface (102) of the power module (100) can be electrically connected to a power module interface (202) of the function module (200), and an operating module interface (104) of the power module (100) can be electrically connected to a power module interface (302) of the operating module (300), and a function module interface (304) of the operating module (300) can be electrically connected to an operating module interface (204) of the function module (200).

12. Electrical installation device (1) according to any one of claims 7 to 11, **characterized in that**
at least the function module interface (102, 304) and/or the power module interface (202, 302) and/or the operating module interface (104, 204) are designed as electrical plug contacts, as a contactless inductive interface or radio-based interface.

13. Electrical installation device (1) according to any one of claims 7 to 12, **characterized in that**
the function module interface (102, 304), the power module interface (202, 302) and/or the operating module interface (104, 204) have both signal transmission means for transmitting the operating signal (BS) and/or the control signal (SS) as well as power transmission means for transmitting a supply voltage for electronic components of the function module (200) or the operating module (300).

14. Electrical installation device (1) according to any of the preceding claims, **characterized in that**
the power module (100) and/or the operating module (300) and/or the function module (200) has an RFID chip, wherein at least one device identifier of the respective power module (100), function module (200) or operating module (300) can be read from the RFID chip and at least one RFID reading unit is formed in the power module (100) and/or the function module (200) and/or the operating module (300).

15. Electrical installation device (1) according to any of the preceding claims, **characterized in that**
the function module (200) and/or the power module (100) has a microcontroller which is connected on the one hand to a memory and on the other hand to the function control unit (FS) or forms the function control unit (FS) in whole or in part, at least one control process for processing at least one operating signal (BS) and for generating at least one special control signal (SS) and/or for providing at least one special supply voltage being stored on the memory, in particular **in that**
the memory has stored control processes adapted to different power modules (100) and/or operating modules (300) for processing different operating signals (BS) and/or for generating different control signals (SS) and/or for providing different special supply voltages.

16. Electrical installation device (1) according to claim 15,
**characterized in that**
the function module (200) and/or the power module (100) and/or the operating module (300) has a maintenance interface connected to the microcontroller for connection to an external read and write unit which can process and/or supplement the control processes stored on the memory.

17. Electrical installation device (1) according to any of the preceding claims,
**characterized in that**
the operating module (300) has more than one operating element (306) which, when actuated, each generate their own operating signal (BS) which can be sent to the function module (200), the function control unit (FS) being able to distinguish between the operating signals (BS) of the respective operating elements (306).

18. Electrical installation device (1) according to any of the preceding claims,
**characterized in that**
the operating element (306) is an ambient sensor, in particular the ambient sensor is designed as a thermometer or a light sensor or a motion sensor.

## Revendications

1. Appareil d'installation électrique (1) pour la commande d'un consommateur électrique, présentant un module de puissance (100), au moins un module de fonction (200) et au moins un module de commande (300),
le module de puissance (100) présentant des contacts électriques pour la mise en contact d'une source de tension et au moins un moyen de montage pour le montage sur une paroi, en particulier dans une ouverture de montage, dans lequel le module de fonction (200) comprend une unité de commande fonctionnelle (FS) pour déterminer un processus de traitement pour un signal de commande (BS) pour générer le signal de commande (SS) et au moins un moyen de retenue pour une fixation amovible avec le module de puissance (100),
le module de commande (300) présentant un élément de commande (306) pour la génération du signal de commande (BS) et un moyen de maintien pour la fixation amovible du module de commande (300) avec le module de puissance (100) ou le module de fonction (200), et le module de fonction (200), le module de commande (300) et le module de puissance (100) étant réalisés les uns par rapport aux autres respectivement comme une unité de boîtier fermée pour elle-même,
**caractérisé en ce que** le module de puissance (100) présente au moins un moyen de maintien pour la fixation amovible d'un module de fonction (200) et les différents modules (100, 200, 300) sont respectivement interchangeables avec des modules génériques de leur type, de sorte qu'un premier module de commande (300) est interchangeable avec un deuxième module de commande générique indépendamment du module de fonction (200).

2. Appareil d'installation électrique (1) selon la revendication 1,
**caractérisé en ce que**
l'unité de commande de fonction (FS) est conçue de telle sorte qu'elle peut traiter le signal de commande (BS) et générer le signal de commande (SS).

3. Appareil d'installation électrique (1) selon la revendication 1,
**caractérisé en ce que**
le module de puissance (100) présente une unité de commande qui peut traiter le signal de commande (BS) et générer le signal de commande (SS) en fonction d'une identification d'appareil/étiquette ID reçue par l'unité de commande de fonction (FS) du module de fonction (100).

4. Appareil d'installation électrique (1) selon l'une des revendications 1 à 3,
**caractérisé en ce que**
le module de puissance (100) présente des contacts électriques pour la mise en contact d'une ligne de BUS et un contrôleur de BUS pour la communication par l'intermédiaire de la ligne de BUS et pour la transmission d'un signal de commande de BUS pour la commande du consommateur électrique par l'intermédiaire de la ligne de BUS.

5. Appareil d'installation électrique (1) selon l'une des revendications 1 à 4,
**caractérisé en ce que**
le module de puissance (100) présente des contacts électriques pour la mise en contact du consommateur électrique et des moyens de commutation électriques pour la commutation directe du consommateur électrique.

6. Appareil d'installation électrique (1) selon l'une des revendications 1 à 5,
**caractérisé en ce que**
le module de fonction (200) présente respectivement un moyen de maintien pour la liaison avec le module de puissance (100) et pour la liaison avec le module de commande (300).

7. Appareil d'installation électrique (1) selon l'une des revendications 1 à 6,
**caractérisé en ce que**
le module de fonction (200) est disposé entre le module de puissance (100) et le module de commande (300) en étant orienté dans une direction de montage (M), et une interface (102) de module de fonction du module de puissance (100) peut être reliée à une interface (202) de module de puissance du module de fonction (200)
et une section de module de commande (204) du module de fonction (200) peut être reliée à une interface de module de fonction (304) du module de commande (300).

8. Appareil d'installation électrique (1) selon l'une des revendications 1 à 5,
**caractérisé en ce que**
le module de fonction (200) et le module de commande (300) peuvent être disposés sur le module de puissance (100) dans un plan commun, l'un à côté de l'autre et orientés dans une direction de montage (M).

9. Appareil d'installation électrique (1) selon la revendication 8,
**caractérisé en ce que**
une interface de module de fonction (102) du module de puissance (100) peut être reliée électriquement à une interface de module de puissance (202) du module de fonction (200) et une interface de module de commande (104) du module de puissance (100) peut être reliée électriquement à une interface de module de puissance (302) du module de commande (300).

10. Appareil d'installation électrique (1) selon la revendication 8,
**caractérisé en ce que**
une interface de module de fonction (102) du module de puissance (100) peut être reliée électriquement à une interface de module de puissance (202) du module de fonction (200) et une interface de module de commande (204) du module de fonction (200) peut être reliée électriquement à une interface de module de fonction (302) du module de commande (300).

11. Appareil d'installation électrique (1) selon la revendication 8,
**caractérisé en ce que**
une interface de module de fonction (102) du module de puissance (100) avec une interface de module de puissance (202) du module de fonction (200) et une interface de module de commande (104) du module de puissance (100) avec une interface de module de puissance (302) du module de commande (300) et une interface de module de fonction (304) du module de commande (300) peut être reliée électriquement à une interface de module de commande (204) du module de fonction (200).

12. Appareil d'installation électrique (1) selon l'une quelconque des revendications 7 à 11,
**caractérisé en ce que**
au moins l'interface de module de fonction (102, 304) et/ou l'interface de module de puissance (202, 302) et/ou l'interface de module de commande (104, 204) sont réalisées sous forme de contacts électriques enfichables, d'interface inductive sans contact ou d'interface basée sur la radio.

13. Appareil d'installation électrique (1) selon l'une quelconque des revendications 7 à 12,
**caractérisé en ce que**
l'interface de module de fonction (102, 304), l'interface de module de puissance (202, 302) et/ou l'interface de module de commande (104, 204) présentent aussi bien des moyens de transmission de signaux pour transmettre le signal de commande (BS) et/ou le signal de commande (SS) que des moyens de transmission d'énergie pour transmettre une tension d'alimentation pour des composants électroniques du module de fonction (200) ou du module de commande (300).

14. Appareil d'installation électrique (1) selon l'une des revendications précédentes,
**caractérisé en ce que**
le module de puissance (100) et/ou le module de commande (300) et/ou le module de fonction (200) présente une puce RFID, au moins une identification d'appareil du module de puissance (100), du module de fonction (200) ou du module de commande (300) respectif pouvant être lue à partir de la puce RFID et au moins une unité de lecture RFID étant réalisée dans le module de puissance (100) et/ou le module de fonction (200) et/ou le module de commande (300).

15. Appareil d'installation électrique (1) selon l'une des revendications précédentes,
**caractérisé en ce que**
le module de fonction (200) et/ou le module de puissance (100) présente un microcontrôleur qui est relié d'une part à une mémoire et d'autre part à l'unité de commande fonctionnelle (FS) ou qui forme entièrement ou partiellement l'unité de commande fonctionnelle (FS), au moins un processus de commande pour le traitement d'au moins un signal de commande (BS) et pour la production d'au moins un signal de commande spécial (SS) et/ou pour la mise à disposition d'au moins une tension d'alimentation spéciale étant enregistré sur la mémoire, en particulier **en ce que** la mémoire a enregistré des processus de commande adaptés à différents modules de puissance (100) et/ou modules de commande (300) pour le traitement de différents signaux de commande (BS) et/ou pour la production de différents signaux de commande (SS) et/ou pour la mise à disposition de différentes tensions d'alimentation spéciales.

16. Appareil d'installation électrique (1) selon la revendication 15,
**caractérisé en ce que**
le module de fonction (200) et/ou le module de puissance (100) et/ou le module de commande (300) présente une interface de maintenance reliée au microcontrôleur pour la connexion à une unité de lecture et d'écriture externe qui peut traiter et/ou compléter les processus de commande stockés dans la mémoire.

17. Appareil d'installation électrique (1) selon l'une des revendications précédentes,
**caractérisé en ce que**
le module de commande (300) présente plus d'un élément de commande (306) qui, lors de l'actionnement, génèrent chacun un signal de commande propre (BS) qui peut être envoyé au module de fonction (200), l'unité de commande fonctionnelle (FS) pouvant faire la différence entre les signaux de commande (BS) des éléments de commande respectifs (306).

18. Appareil d'installation électrique (1) selon l'une des revendications précédentes,
**caractérisé en ce que**
l'élément de commande (306) est un capteur d'environnement, en particulier le capteur d'environnement est conçu comme un thermomètre ou un capteur de lumière ou un capteur de mouvement.
